(19) Europäisches Patentamt

European Patent Office

Office européen des brevets

(11) **EP 4 708 731 A1**

(12) **EUROPEAN PATENT APPLICATION**

(43) Date of publication:
**11.03.2026 Bulletin 2026/11**

(21) Application number: **25197449.9**

(22) Date of filing: **21.08.2025**

(51) International Patent Classification (IPC):
***H04B 10/70*** (2013.01)

(52) Cooperative Patent Classification (CPC):
**H04B 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.08.2024 US 202418813532**

(71) Applicant: **The Boeing Company**
**Arlington, VA 22202 (US)**

(72) Inventors:
• **ELLIS, Jennifer Lee**
  **Arlington, 22202 (US)**
• **KIM, Danny Myung Kon**
  **Arlington, 22202 (US)**
• **YURASH, Brett Alexander**
  **Arlington, 22202 (US)**
• **CUI, Shanying**
  **Arlington, 22202 (US)**
• **MERKOUCHE, Sofiane**
  **Arlington, 22202 (US)**
• **TAGGESELL, Cameron Jean**
  **Arlington, 22202 (US)**

(74) Representative: **Bugnion S.p.A. - US1**
**Bugnion S.p.A.**
**Via Pancaldo 68**
**37138 Verona (IT)**

(54) **DEPLOYABLE QUANTUM ENTANGLEMENT SWAPPING SYSTEM**

(57)    A quantum entanglement system comprising a laser system, a spontaneous parametric down conversion crystal system, and a thermal management system. The laser system is configured to generate a laser beam. The spontaneous parametric down conversion crystal system comprises a spontaneous parametric down conversion crystal configured to receive the laser beam at a spontaneous parametric down conversion crystal and generate an entangled photon pair in response to the spontaneous parametric down conversion crystal receiving the laser beam. The thermal management system is configured to maintain the spontaneous parametric down conversion crystal at an annealing temperature during a generation of the entangled photon pair. A translation system is configured to move a position of the spontaneous parametric down conversion crystal.

FIG. 2

EP 4 708 731 A1

## Description

### BACKGROUND INFORMATION

#### 1. Field:

The present disclosure relates generally to communications and in particular, to communications using quantum states.

#### 2. Background:

A quantum network is comprised of devices such as quantum computers, quantum sensors, and quantum memories connected via quantum communications devices. These devices are also referred to as nodes and can be located aboard platforms such as ground stations and satellites. These nodes or devices are intended to share quantum information in a secure manner. For example, devices in a quantum network are used to provide quantum key distribution to ensure secure communication.

With quantum keys, two parties can generate and share cryptographic keys with security guaranteed by the laws of quantum mechanics. The quantum keys are generated by transmitting quantum bits in the form of entangled photons. An attempt to eavesdrop on the communication disturbs the quantum states or destroys the entanglement of the photons. As a result, the two parties will know that a potential breach has occurred.

In another example, the quantum network can be used to transmit information in qubits. A qubit can be 0, 1, or in superposition of both 0 and 1 simultaneously.

These qubits can be represented by states in the photons. In one example, the polarization of a photon is an orientation of oscillation that can be manipulated to encode quantum information, with horizontal polarization representing 0, vertical polarization representing 1, or any quantum superposition of these states. This ability to exist in superposition states enables the use of photons as carriers of quantum information.

### SUMMARY

An embodiment of the present disclosure provides a quantum entanglement system comprising a laser system, a spontaneous parametric down conversion crystal system, a thermal management system, a translation system, and a photon entanglement swapper system. The laser system is configured to generate a first laser beam and a second laser beam. The spontaneous parametric down conversion crystal system comprises a number of spontaneous parametric down conversion crystals configured to receive the first laser beam at a first location in the number of spontaneous parametric down conversion crystals; generate a first entangled photon pair in response to the number of spontaneous parametric down conversion crystals receiving the first laser beam, wherein the first entangled photon pair comprises a first photon entangled with a second photon; receive the second laser beam at a second location in the number of spontaneous parametric down conversion crystals; and generate a second entangled photon pair in response to the number of spontaneous parametric down conversion crystals receiving the second laser beam, wherein the second entangled photon pair comprises a third photon entangled with a fourth photon. The thermal management system is configured to maintain the number of spontaneous parametric down conversion crystals at an annealing temperature during a generation of the first entangled photon pair and the second entangled photon pair. The translation system is configured to move a position of the number of spontaneous parametric down conversion crystals relative to the first laser beam and the second laser beam. The photon entanglement swapper system is configured to swap entanglement between the first entangled photon pair and the second entangled photon pair, wherein the second photon in the first entangled photon pair is combined with the third photon in the second entangled photon pair to form a combined photon pair in a Bell state and wherein the first photon in the first entangled photon pair becomes entangled with the fourth photon in the second entangled photon pair.

Another embodiment of the present disclosure provides a quantum entanglement system comprising a laser system, a spontaneous parametric down conversion crystal system, and a thermal management system. The laser system is configured to generate a laser beam. The spontaneous parametric down conversion crystal system comprises a spontaneous parametric down conversion crystal configured to receive the laser beam at a spontaneous parametric down conversion crystal and generate an entangled photon pair in response to the spontaneous parametric down conversion crystal receiving the laser beam. The thermal management system is configured to maintain the spontaneous parametric down conversion crystal at an annealing temperature during a generation of the entangled photon pair.

Yet another embodiment of the present disclosure provides a method for generating entangled photon pairs. A first laser beam is directed at a first location in a number of spontaneous parametric down conversion crystals. A first entangled photon pair is generated in response to the number of spontaneous parametric down conversion crystals receiving the first laser beam. The first entangled photon pair comprises a first photon entangled with a second photon. A second laser beam is directed at a second location in the number of spontaneous parametric down conversion crystals. A second entangled photon pair is generated in response to the number of spontaneous parametric down conversion crystals receiving the second laser beam. The second entangled photon pair comprises a third photon entangled with a fourth photon. The number of spontaneous parametric down conversion crystals is maintained at an annealing temperature during the generation of the first entangled photon pair and the second entangled photon pair. The second photon in the first entangled photon pair and the third photon in the second entangled photon pair are transmitted to a photon entanglement swapper system. The second photon in the first entangled photon pair and the third photon in the second entangled photon pair are interfered to form a combined photon pair in a Bell state. The first photon in the first entangled photon pair becomes entangled with the fourth photon in the second entangled photon pair. The features and functions can be achieved independently in various embodiments of the present disclosure or may be combined in yet other embodiments in which further details can be seen with reference to the following description and drawings.

## BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

**Figure 1** is a pictorial illustration of a quantum network in accordance with an illustrative embodiment;
**Figure 2** is an illustration of a block diagram of a quantum communications environment in accordance with an illustrative embodiment;
**Figure 3** is an illustration of a block diagram of a quantum entanglement system implemented using two or more platforms in accordance with an illustrative environment;
**Figure 4** is an illustration of a block diagram of a quantum entanglement system implemented in satellites in accordance with an illustrative embodiment;
**Figure 5** is an illustration of a block diagram of a laser generator and a laser system in accordance with an illustrative embodiment;
**Figure 6** is an illustration of a block diagram of a spontaneous parametric down conversion crystal system in accordance with an illustrative embodiment;
**Figure 7** is an illustration of a block diagram of a temperature controller in accordance with an illustrative embodiment;
**Figure 8** is a schematic illustration of a polarization analyzer in accordance with an illustrative embodiment;
**Figure 9** is an illustration of a block diagram of a Bell measurement system in accordance with an illustrative embodiment;
**Figure 10** is an illustration of a block diagram of a beam stabilization system in accordance with an illustrative embodiment;
**Figure 11** is an illustration of a block diagram of temperature control loops in accordance with an illustrative embodiment;
**Figure 12** is a pictorial illustration of a crystal management system for a spontaneous parametric down conversion crystal in accordance with an illustrative embodiment;
**Figure 13** is an illustration of a flowchart of a process for performing entanglement swapping in accordance with an illustrative embodiment;
**Figure 14** is an illustration of a flowchart of a process for generating entangled photon pairs in accordance with an illustrative embodiment;
**Figure 15** is an illustration of a flowchart for swapping photon entanglement in accordance with an illustrative embodiment; and
**Figure 16** is an illustration of a flowchart of a process for performing secure communications using the entangled photons in accordance with an illustrative embodiment.

## DETAILED DESCRIPTION

The illustrative embodiments recognize and take into account one or more different considerations as described herein. Quantum repeaters can be used to maintain the integrity of the quantum states in at least one of over long distances or in absences of lines of site between platforms using free space transmission.

Quantum repeaters that rely on entanglement swapping can be used to distribute entanglement between platforms that cannot directly interact because of a lack of a line of sight or a distance that is too great for reliable transmission of qubits. Another issue that can arise is an optical loss for other circumstances with respect to the quantum network architecture.

For example, entanglement swapping aboard a satellite can be important for long distance quantum communications. Losses incurred from optical transmission from satellite to ground can be on the order of 60-80 dB. Optical losses between satellites in orbit can be considerably less. With these lower losses, the entanglement distribution rates are calculated to be up to 40 dB higher for a few km-scale distances, and more for 10's of km scale distances. Therefore, the creation of a global quantum network requires the capability to conduct entanglement swapping between orbiting nodes.

Further, the use of quantum repeaters between satellites can enable communicating information between satellites that do not have a line of sight to each other.

One challenge with entanglement swapping with satellites is the generation of photon pairs that are highly entangled in one degree of freedom, but indistinguishable and uncorrelated in all other degrees of freedom. For example, photons can be generated that are entangled in their polarization. As a result, it is also desirable that the photons are indistinguishable and uncorrelated in the other degrees of freedom of frequency, time, and spatial mode. This lack of correlations in other degrees of freedom is an additional parameter used for entanglement swapping.

For example, two photons can be highly entangled without necessarily being swappable, such that the entanglement between these two photons cannot be transferred or shared between other photons. Current systems for swapping photons in space-based entangled photon sources do not have this indistinguishability trait.

In the illustrative example, two entangled photon pairs comprising four photons are created by pumping a number of spontaneous parametric down conversion crystals with a laser, in a $\chi^{(2)}$ non-linear process twice in two spatially distinct locations in a number of spontaneous parametric down conversion crystals. This indistinguishability eliminates any source of which-path information of the generated down converted photon pairs. Current techniques achieve indistinguishability using narrow bandwidth optical filters and single mode spatial filters at the cost of significant photon loss. To offset the loss from these filters, at least one of higher power lasers or superconducting single photon detectors are used with current systems.

However, these current systems are not deployable on a satellite case due to the size and power consumption. In the illustrative example, components with a lower size, weight, and power requirements are used for the laser source and detectors. These types of components can also be referred to as low SWAP components. For example, a femtosecond fiber laser and silicon avalanche photodiode (APD) detectors can be used in place of currently implemented devices.

For example, these components can be implemented such that the system power consumption in a satellite can be much lower than current systems used on the ground. Power consumption can be, for example, 55 W or less and the total system volume can be about 12 liters.

Further, entanglement swapping uses a high generation rate of entangled pairs that are indistinguishable. This type of entangled photon pair generation involves the use of high power, short pulse (femtosecond) lasers.

However, this type of pump laser has high peak powers that can cause degradation to the number of spontaneous parametric down conversion crystals used to generate the entangled photons. This degradation to the number of spontaneous parametric down conversion crystals can result in a decline in the fidelity or rate of entangled photon pair generation over time.

The illustrative examples mitigate this degradation issue. The reduction in degradation can be performed by at least one of the operating the number of spontaneous parametric down conversion crystals at an elevated temperature or spatially translating the number of spontaneous parametric down conversion crystals so that the laser beam does not interact with any given spatial location on the number of spontaneous parametric down conversion crystals for a prolonged time.

In the illustrative example, entangled photon pairs are generated using a type II down conversion process. This type of photon generation results in pairs of photons that are entangled in their polarization.

In one illustrative example, the polarization entanglement is read out using four polarization analyzers. With this example, each polarization analyzer comprises two liquid crystal variable retarders (LCVRs), a polarizing beam splitter (PBS), and two avalanche photodiode detectors (APDs). This combination results in a total of 8 polarization retarders and 8 avalanche photodiode detectors.

This configuration increases the fraction of swapping events that can be detected, resulting in an increase in the overall entanglement swapping rate. Additionally, this configuration can provide redundancy and robustness to failures of a subset of the avalanche photodiode detectors or liquid crystal variable retarders. For example, one of the avalanche photodiode detectors in each of the polarization analyzers can fail and the system can continue to execute entanglement swapping. Further, the illustrative examples also employ a number of control features to enable the quantum entanglement system to operate over an extended temperature range. These control features include an active laser beam steering feedback to maintain alignment and active temperature control on a number of select sensitive components. The active beam steering can provide an entanglement swapping system that has good spatial overlap at the Bell-state interference beamsplitter. Thus, the illustrative examples provide a method, apparatus, and system for the quantum entanglement of photons. In one illustrative example, a quantum entanglement system comprises a laser system, a spontaneous parametric down conversion crystal system, and a thermal management system. The laser system is configured to generate a laser beam. The spontaneous parametric down conversion crystal system comprises a spontaneous parametric down conversion crystal configured to receive the laser beam at a spontaneous parametric down conversion crystal and generate an entangled photon pair in response to the spontaneous parametric down conversion crystal receiving the laser beam. The thermal management system is configured to maintain the spontaneous parametric down conversion crystal at an annealing temperature during a generation of the entangled photon pair.

The thermal management system enables increasing the lifespan of crystals used to generate entangled photons. Further, this thermal management system also enables selecting laser generators having a smaller size and configuration. These types of lasers can increase degradation of a crystal as compared to larger lasers without the use of the thermal management system. Further, with the use of temperature control loops for other components such as a second harmonic generation crystal and a spectral filter, increased performance in generating entangled photon pairs can occur.

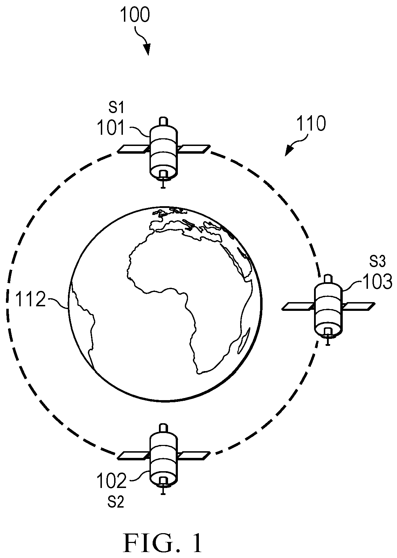

With reference now to the figures and, in particular, with reference to **Figure 1**, a pictorial illustration of a quantum network is depicted in accordance with an illustrative embodiment. The quantum network can be comprised of various combinations of ground and satellite based quantum nodes.

In this illustrative example, quantum network **100** comprises nodes in the form of satellites **110** orbiting Earth **112**. In this example, satellites **110** comprise satellite S1 **101,** satellite S2 **102,** and satellite S3 **103.** In this illustrative example, direct quantum communications between satellite S1 **101** and satellite S2 **102** cannot occur because the line of site is absent between these two satellites. In another example, a line of sight is present, but the distance between the satellite S1 **101** and satellite S2 **102** cannot occur because of the distance between the satellites.

With these situations, satellite S3 **103** has components that enable the satellite S3 **103** to operate as a quantum repeater in quantum network **100**. In this example, satellite S3 **103** is a quantum repeater that uses entanglement swapping to establish entanglement between satellite S1 **101** and satellite S2 **102.**

In this example, satellite S1 **101** and satellite S2 **102** both generate entangled photons pairs. An entangled photon pair is a pair of photons that are entangled with each other. Satellite S1 **101** generates an entangled photon pair comprising photon A entangled with photon B. Satellite S2 **102** generates an entangled photon pair comprising photon C entangled with photon D.

In this illustrative example, the generation of entangled photon pairs is performed in a manner that reduces or mitigates degradation of spontaneous parametric down conversion crystals in response to laser beams being directed at the crystals to generate entangled photon pairs.

With the use of these spontaneous parametric down conversion crystals in a space environment, these crystals are maintained at an annealing temperature during the generation of the photons for the entangled photon pairs using heat. In this illustrative example, the spontaneous parametric down conversion crystals are constantly maintained at the annealing temperature. This annealing temperature reduces degradation of the crystals. Generated entangled photon pairs using crystals maintained at an annealing temperature can repair and improve the quality of a spontaneous parametric down conversion crystal.

Additionally, the degradation to the spontaneous parametric down conversion crystals in satellite S1 **101** and satellite S2 **102** can also be reduced by translating the spontaneous parametric down conversion crystals such that the laser beams are directed to different locations in the spontaneous parametric down conversion crystals at different times when generating the entangled photon pairs.

Using both of these features in satellite S1 **101** and satellite S2 **102** can reduce the degradation of spontaneous parametric down conversion crystals in the satellites. As a result, the lifespan of spontaneous parametric down conversion crystals in satellite S1 **101** and satellite S2 **102** can be increased as compared to current techniques. This increase in the lifespan can reduce the amount of maintenance needed for satellites. With this example, satellite S1 **101** transmits photon B to satellite S3 **103**. Satellite S2 **102** transmits photon C to satellite S3 **103**. Satellite S3 **103** performs entanglement swapping in which photon B is combined with photon C and the two photons are measured on the Bell-state basis. Upon detection of photons B and C in a Bell state, photon A at satellite S1 **101** becomes entangled with photon D at satellite S2 **102**.

In this example, satellite S3 **103** performs a measurement of the combined photon pair comprising photon B and photon C. This measurement can be compared with measurements made by satellite S1 **101** of photon A and satellite S2 **102** of photon D. These measurements can be used to ensure that eavesdropping has not occurred in the transmission of photon B and C to satellite S3 **103**. If the eavesdropping has not occurred, then photon A and photon D can be used in performing quantum communications.

**Figure 1** is intended as an example, and not as an architectural limitation for the different illustrative embodiments. For example, the platforms in quantum network **100** can take a number of other forms in addition to or in place of the satellites illustrated in quantum network **100**. For example, the platforms can be selected from at least one of a mobile platform, a stationary platform, a land-based structure, an aquatic-based structure, or a space-based structure. With respect to space-based structures, platforms can also be selected from at least one of a spacecraft, a space station, a space shuttle, a rocket, or some other space-based structure. As another example, a land-based structure can be a ground station such as a building, the communication center, or some other ground-based station. As used herein, "a number of" when used with reference to items, means one or more items. For example, "a number of different types of networks" is one or more different types of networks.

Further, as used herein, the phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Further, in another example, a ground station can be used in place of satellite S3 **103** that has a line of sight to both satellite S1 **101** and satellite S2 **102.**

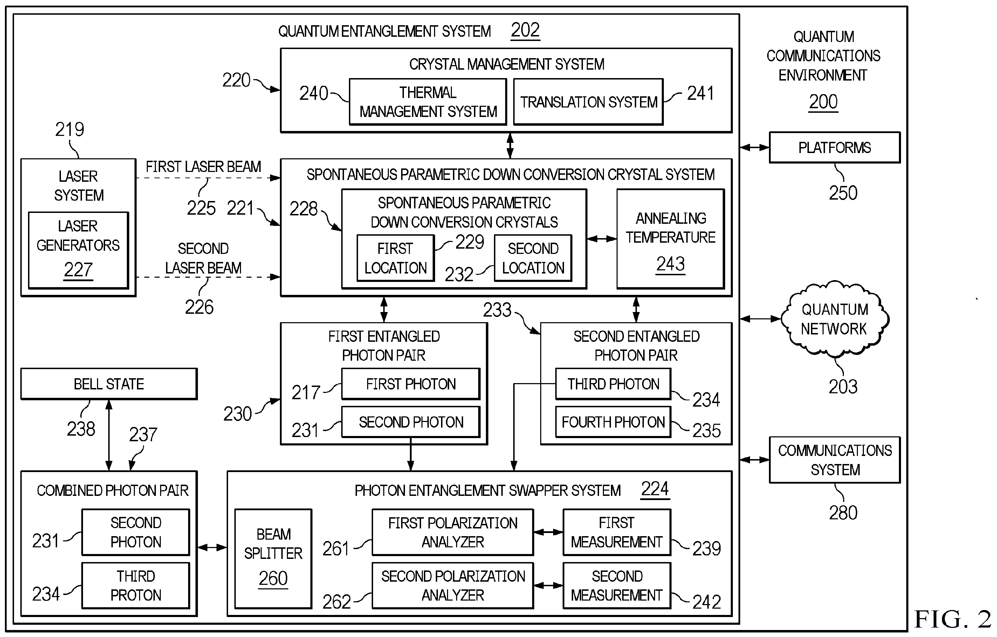

With reference now to **Figure 2,** an illustration of a block diagram of a quantum communications environment is depicted in accordance with an illustrative embodiment. In this illustrative example, quantum communications environment **200** includes components that can be implemented in hardware such as the hardware shown in quantum network **100 in Figure 1.** In this illustrative example, quantum entanglement system **202** is an example of a system that can be used with quantum network **203** to facilitate quantum communications. Quantum entanglement system **202** is comprised of a number of different components. In this illustrative example, quantum entanglement system **202** comprises laser system **219,** spontaneous parametric down conversion crystal system **221,** crystal management system **220,** and photon entanglement swapper system **224.**

In this example, laser system **219** is a hardware system and is configured to generate first laser beam **225** and second laser beam **226.** Laser system **219** includes a number of laser generators **227.** The number of laser generators **227** is comprised of hardware that generates the laser beams.

In one example, the number of laser generators **227** is two laser generators in which each laser generator generates one of the two laser beams. In another illustrative example, the number of laser generators **227** is one laser generator in which the laser generator generates a laser beam that is split to form first laser beam **225** and second laser beam **226.**

Spontaneous parametric down conversion crystal system **221** is comprised of a number of spontaneous parametric down conversion crystals **228.** The number of spontaneous parametric down conversion crystals **228** can take a number of different forms depending on the type of laser beam being used. In one illustrative example, the number of spontaneous parametric down conversion crystals **228** is comprised of a number of materials selected from at least one of periodically poled potassium titanyl phosphate (ppKTP), potassium titanyl phosphate (KTP), potassium titanyl arsenate (KTA), rubidium titanyl phosphate (RTP), rubidium doped potassium titanyl phosphate (RB:KTP), potassium dihydrogen phosphate (KDP), bismuth triborate (BiBO), beta barium borate (BBO), periodically poled lithium niobate (PPLN), or some other suitable type of material.

During operation of quantum entanglement system **202,** the number of spontaneous parametric down conversion crystals **228** receives first laser beam **225** at first location **229** in the number of spontaneous parametric down conversion crystals **228.** The number of spontaneous parametric down conversion crystals **228** generates first entangled photon pair **230** in response to the number of spontaneous parametric down conversion crystals **228** receiving first laser beam **225.** In this example, first entangled photon pair **230** comprises first photon **217** entangled with second photon **231.**

Further in this example, the number of spontaneous parametric down conversion crystals **228** receives second laser beam **226** at second location **232** in the number of spontaneous parametric down conversion crystals **228.** The number of spontaneous parametric down conversion crystals **228** generates second entangled photon pair **233** in response to the number of spontaneous parametric down conversion crystals **228** receiving second laser beam **226.** In this example, second entangled photon pair **233** comprises third photon **234** entangled with fourth photon **235.**

In this example, directing first laser beam **225** and second laser beam **226** in the number of spontaneous parametric down conversion crystals **228** can cause degradations in the number of spontaneous parametric down conversion crystals **228.** These degradations can be selected from at least one of a thermal stress from rapid heating and cooling, changing an optical property of the crystal, a crack in the crystal, a surface damage in the crystal, grey tracking, or other types of undesired inconsistencies. In this example, grey tracking is the generation of localized regions with reduced transparency after exposure to laser beam. These changes can reduce the optical efficiency of the crystal resulting in a lower generation of entangled photon pairs. These degradations can also be referred to as inconsistencies or laser induced damage.

In this example, crystal management system **220** is a physical system that can reduce the generation of undesired inconsistencies in the number of spontaneous parametric down conversion crystals **228.** As depicted in this example, crystal management system **220** comprises thermal management system **240** and translation system **241.** Thermal management system **240** can maintain the number of spontaneous parametric down conversion crystals **228** at annealing temperature 243 during the generation of first entangled photon pair **230** and second entangled photon pair **233.** In this example, thermal management system **240** can maintain the number of spontaneous parametric down conversion crystals **228** at annealing temperature **243** that is selected to minimize inconsistencies in the number of spontaneous parametric down conversion crystals **228** while maximizing photon pair generation by the number of spontaneous parametric down conversion crystals **228.**

In this example, annealing temperature **243** can be a single temperature, or a range of temperatures. In one example, thermal management system **240** can maintain the number of parametric down conversion crystals at annealing temperature **243** that is from about 50 degrees C to about **150** degrees C.

In this example, thermal management system

240 performs at least one of heating or cooling of the number of spontaneous parametric down conversion crystals 228 to maintain the number of spontaneous parametric down conversion crystals 228 at annealing temperature 243 during the generation of first entangled photon pair 230 and second entangled photon pair 233. Thermal management system 240 can maintain the number of spontaneous parametric down conversion crystals 228 at annealing temperature 243 during the generation of first entangled photon pair 230 and second entangled photon pair 233 using a proportional-integral-derivative control loop.

In this example, crystal management system 220 can also include translation system 241. Translation system 241 is a physical system that moves the number of spontaneous parametric down conversion crystals 228 to different positions relative to first laser beam 225 and second laser beam 226. The position can be the position for one spontaneous parametric down conversion crystal or for multiple spontaneous parametric down conversion crystals when the number of spontaneous parametric down conversion crystals 228 is more than one crystal.

In these examples, translation system 241 can move the position of the number of spontaneous parametric down conversion crystals 228 on a number of axes. For example, the translation system can move one or more crystals in the number of spontaneous parametric down conversion crystals 228 along a single axis for multiple axes.

In this example, photon entanglement swapper system 224 is a hardware system and can swap the entanglement between first entangled photon pair 230 and second entangled photon pair 233. In this example, second photon 231 in first entangled photon pair 230 is combined with third photon 234 in second entangled photon pair 233 to form combined photon pair 237 in Bell state 238. In swapping of entanglements between first entangled photon pair 230 and second entangled photon pair 233, first photon 217 in first entangled photon pair 230 becomes entangled with fourth photon 235 in second entangled photon pair 233.

In this illustrative example, quantum entanglement system 202 can be deployable by being connected to a number of platforms 250. The number of platforms 250 can be selected from at least one of a mobile platform, a stationary platform, a land-based structure, an aquatic-based structure, a space-based structure, a ground station, a satellite, a space station, a spacecraft, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a submarine, an automobile, a power plant, a bridge, a dam, a house, a manufacturing facility, a building, or some other suitable type of platform. For example, quantum entanglement system 202 can be connected to a single platform such as a satellite. In other examples, the system can be distributed through multiple platforms. In this manner, quantum entanglement system 202 is a deployable quantum swapping entanglement system.

When one component is "connected" to another component, the connection is a physical connection. For example, a first component, such as a quantum entanglement system, can be considered to be physically connected to a second component, such as a platform, by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both. In some examples, the first component can be physically connected to the second component by being located within the second component. In one illustrative example, photon entanglement swapper system 224 comprises beam splitter 260, first polarization analyzer 261, and second polarization analyzer 262. In this example, beam splitter 260 is an optical device and receives second photon 231 from first entangled photon pair 230 and third photon 234 from second entangled photon pair 233. Beam splitter 260 outputs second photon 231 and third photon 234 as combined photon pair 237 in Bell state 238.

In this example, first polarization analyzer 261 receives combined photon pair 237 in Bell state 238 and generates first measurement 239 of combined photon pair 237 in Bell state 238. Further, second polarization analyzer 262 receives combined photon pair 237 in Bell state 238 and generates second measurement 242 of combined photon pair 237 in Bell state 238. In this example, these polarization analyzers are hardware devices that measure the polarization of photons to generate first measurement 239 and second measurement 242.

In one illustrative example, communications system 280 is also present in quantum communications environment 200. With this example, communications system 280 can determine whether eavesdropping has occurred using first measurement 239 and second measurement 242. In this depicted example, communications system 280 can include at least one of a computing device, a processor, and other components that include processes that perform an analysis to determine whether eavesdropping has occurred. This analysis can be implemented using program code that is run by a computing device, the processes, or other component.

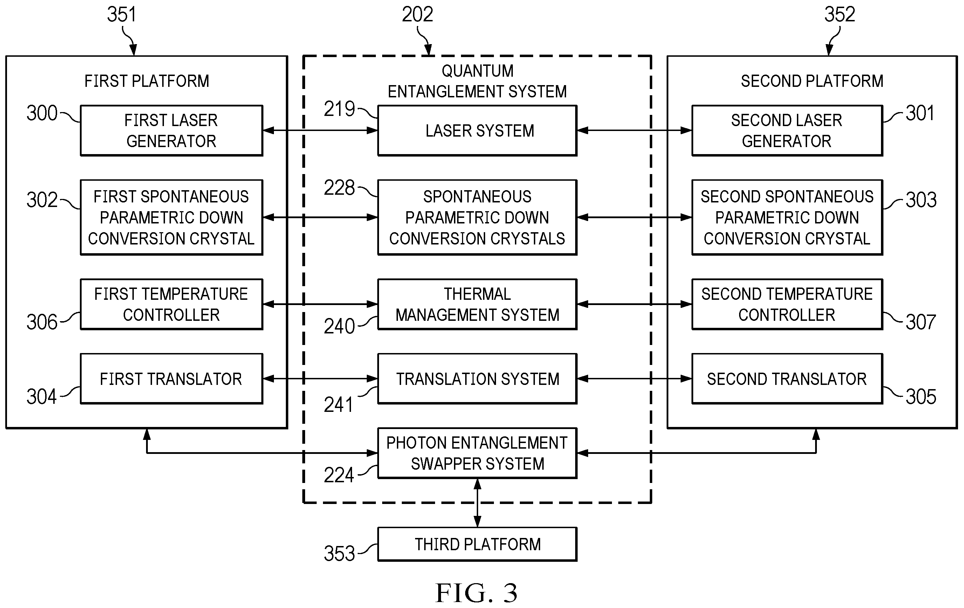

In this depicted example, communications system 280 can include at least one of a computing device, a processor, and other components that include processes that perform an analysis to determine whether eavesdropping has occurred. This analysis can be implemented using program code that is run by a computing device, the processes, or other component. These measurements can be compared to measurements of first photon **217** and fourth photon **235** to determine whether the correct correlation is present between first photon **217,** second photon **231,** third photon **234,** and fourth photon **235.** Communications system **280** can perform a secure communication of data using first photon **217** and fourth photon **235** in response to an absence of eavesdropping. The secure communications can take a number of different forms. For example, the secure communications can be the secure communication of data that is selected from a group of techniques comprising quantum key distribution, quantum teleportation, quantum secret sharing, entanglement-based quantum authentication, and other suitable types of quantum techniques for communicating information. Turning next to **Figure 3,** an illustration of a block diagram of a quantum entanglement system implemented using two or more platforms is depicted in accordance with an illustrative environment. In the illustrative examples, the same reference numeral may be used in more than one figure. This reuse of a reference numeral in different figures represents the same element in the different figures.

As depicted in this example, laser system **219** comprises first laser generator **300** that generates the first laser beam **225** in first platform **351** and second laser generator **301** that generates second laser beam **226** in second platform **352.** Further, the number of spontaneous parametric down conversion crystals **228** comprises a first spontaneous parametric down conversion crystal **302** in first platform **351** and second spontaneous parametric down conversion crystal **303** in second platform **352.**

In this example, thermal management system **240** comprises first temperature controller **306** in first platform **351** that is configured to maintain first spontaneous parametric down conversion crystal **302** at annealing temperature **243** during the generation of first entangled photon pair **230** and second temperature controller **307** in second platform **352** that is configured to maintain second spontaneous parametric down conversion crystal **303** at annealing temperature **243** during the generation of second entangled photon pair **233.**

Further, translation system **241** comprises a first translator **304** in first platform **351** that is configured to move first spontaneous parametric down conversion crystal **302** and second translator **305** in second platform **352** that is configured to move second spontaneous parametric down conversion crystal **303.** In this example, photon entanglement swapper system **224** is connected to a platform selected from a group comprising first platform **351,** second platform **352,** and third platform **353.**

These platforms can take a number of forms. For example, wherein first platform **351,** second platform **352,** and third platform **353** are each selected from a group comprising a mobile platform, a stationary platform, a land-based structure, an aquatic-based structure, a space-based structure, a ground station, a satellite, a space station, a spacecraft, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a submarine, an automobile, a power plant, a bridge, a dam, a house, a manufacturing facility, and a building.

For example, first platform **351** can be a first satellite and second platform **352** can be a second satellite. In this example, third platform **353** can be a third satellite or ground station.

Further, in another illustrative example, photon entanglement swapper system **224** can be connected in first platform **351** or second platform **352** instead of in third platform **353.**

The illustration of quantum communications environment **200** in the different components in this environment in **Figures 2-3** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

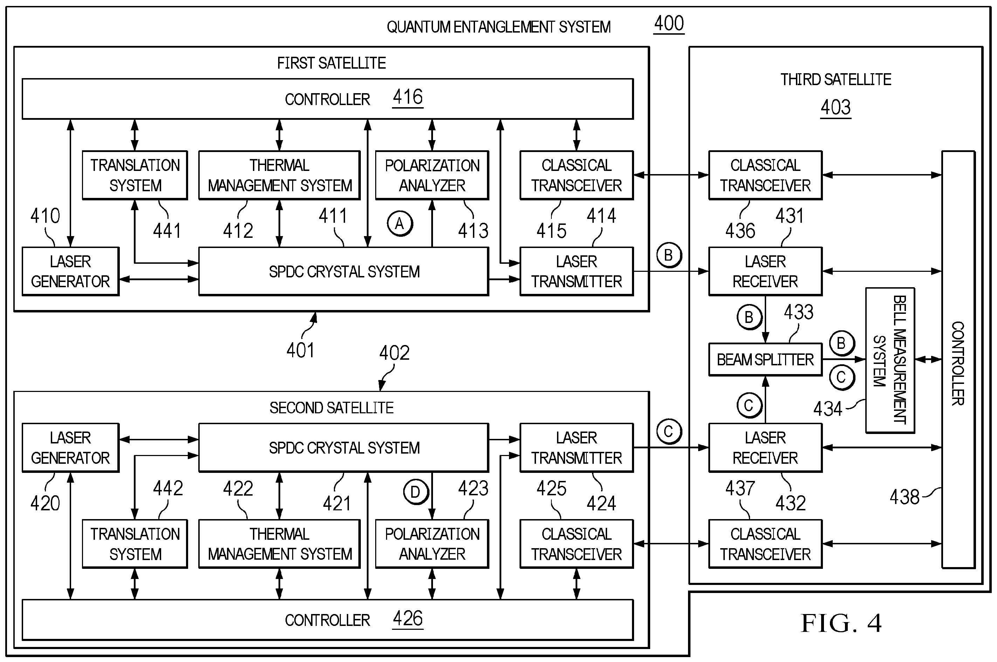

With reference next to **Figure 4,** an illustration of a block diagram of a quantum entanglement system implemented in satellites is depicted in accordance with an illustrative embodiment. In this illustrative example, quantum entanglement system **400** is an example of an implementation for quantum entanglement system **202** in **Figure 2.** As depicted, the system is distributed through three satellites, first satellite **401,** second satellite **402,** and third satellite **403.** The components in the satellites can be examples of components used to implement satellite S1 **101,** satellite S2 **102,** and satellite S3 **103** in **Figure 1.**

In this illustrative example, first satellite **401** comprises laser generator **410,** spontaneous parametric down conversion (SPDC) crystal system **411,** thermal management system **412,** translation system **441,** polarization analyzer **413,** laser transmitter **414,** classical transceiver **415,** and controller **416.** Further in this example, second satellite **402** comprises laser generator **420,** spontaneous parametric down conversion (SPDC) crystal system **421,** thermal management system **422,** translation system **442,** polarization analyzer **423,** laser transmitter **424,** classical transceiver **425,** and controller **426.** As depicted, third satellite **403** comprises laser receiver **431,** laser receiver **432,** beam splitter **433,** Bell measurement system **434,** classical transceiver **436,** classical transceiver **437,** and controller **438.**

In this illustrative example, the transmission of the laser beams and photons are free space. In some illustrative examples, the transmission of laser beams and photons within the satellites can be performed using optical fibers in addition to or in place of free space. In this illustrative example, controller **416** controls the operation of the different components within satellite **401.** In similar fashion, controller **426** controls the operation of components within satellite **402.** Controller **438** controls the operation of components within satellite **403** and can perform analysis of various measurements made by these components.

These controllers can be implemented using various types of hardware. For example, these controllers include processes implemented in program instructions that are configured to run on hardware such as a processor unit. In another example, firmware in the form of program instructions and data can be stored in persistent memory to run on a processor unit.

In this example, the hardware can take a form selected from at least one of a processor unit circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array (FPLA), a field-programmable gate array (FPGA), and other suitable hardware devices.

In one example, a number of processor units can be used to implement the controllers. When multiple processor units are present, these processor units can be of the same type or different types of processor units. For example, the number of processor units used in a controller can be selected from at least one of a single core processor, a dual-core processor, a multi-processor core, a general-purpose central processing unit (CPU), a graphics processing unit (GPU), a digital signal processor (DSP), or some other type of processor unit. For example, these controllers can perform operations selected from at least one of manage control loops, record photon detection events, correlate photon detection events, identify coincident events for at least one of detecting or verifying the entanglement, or other operations.

In this illustrative example, laser generator **410** in first satellite **401** sends a laser beam into SPDC crystal system **411** to generate an entangled photon pair AB. In this example, entangled photon pair AB comprises photon A and photon B that are entangled with each other in this photon pair. In this illustrative example, laser generator **420** in second satellite **402** sends a laser beam into SPDC crystal system **421** to generate an entangled photon pair CD. In this example, entangled photon pair CD comprises photon C and photon D that are entangled with each other in this photon pair.

In this example, entangled photon pair AB is an example of first entangled photon pair **230** in **Figure 2.**

Photon A is an example of first photon **217** and photon B is an example of second photon **231** in **Figure 2.** Further, entangled photon pair CD is an example of second entangled photon pair **233** in **Figure 2.** Photon C is an example of third photon **234** and photon D is an example of fourth photon **235** in **Figure 2.**

In this illustrative example, thermal management systems are used to maintain the crystals at desired temperatures to increase the life span or longevity of the crystals. As depicted, thermal management system **412** manages the temperature of SPDC crystal system **411,** and thermal management system **422** manages the temperature of SPDC crystal system **421.** In this example these temperatures are maintained during the generation of the entangled photon pairs. Further, these temperatures can be maintained even when entangled photon pairs are not being generated.

Further in this example, translation system **441** moves a number of crystals in SPDC crystal system **411** and translation system **442** moves a position of a number of crystals in SPDC crystal system **421** as laser beams are directed towards the number of crystals in these SPDC crystal systems during the generation of entangled photon pairs by these SPDC crystal system. This movement of the crystals by these translation systems reduces degradation that may occur from laser beams being directed towards the crystals.

In this illustrative example, the anneal temperature is selected to mitigate degradation to these crystals from laser beams. Further, with the use of these thermal management systems, laser generators can be selected that have short wavelengths and high peak powers to produce entangled photons that are compatible with reduced power and size of single photon detectors.

As depicted, photon B from entangled photon pair AB is transmitted from first satellite **401** to third satellite **403** using laser transmitter **414.** Photon B is received at third satellite **403** by laser receiver **431** in third satellite **403.**

In this example, photon C from entangled photon pair CD is transmitted from second satellite **402** to third satellite **403** by laser transmitter **424.** Photon C is received at third satellite **403** by laser receiver **432** in third satellite **403.**

In this illustrative example, laser transmitter **414** and laser transmitter **424** can be implemented using a telescope or an aperture that directs photons out over the free space link to third satellite **403.** Other components such as fast and slow steering loops can be used to control the beam pointing of the laser beam leaving the satellite. Also, the laser transmitters can also include a beacon laser for targeting and a beacon for polarization measurement and feedback control to correct for the relative orientation of the satellites. Laser receiver **431** and laser receiver **432** can include similar components that are designed to direct photons from the free space link to beam splitter **433.** In this example, beam splitter **433** is a nonpolarizing beam splitter.

In this illustrative example, beam splitter **433** receives photon B and photon C from laser receiver **431** and laser receiver **432** and entangles these two photons with each other. This entanglement results in the swapping of entanglement between entangled photon pair AB and entangled photon pair CD. In this example, photon B is combined with photon C to form a combined photon pair in a Bell state. Further, swapping the entanglement results in photon A becoming entangled with photon D. In this example, measurements of the combined photons can be made using Bell measurement system **434.**

Further in this illustrative example, photon A in first satellite **401** is sent from SPDC crystal system **411** to polarization analyzer **413**. In response to receiving photon A, polarization analyzer **413** measures the polarization state of photon A. Additionally, photon D in second satellite **402** is sent to polarization analyzer **423** from SPDC crystal system **421**. In response to receiving photon D, polarization analyzer **423** measures the polarization state of photon D.

In this illustrative example, the measurements of the polarization states of photon A, photon D, photon B, and photon C can be sent between the satellites using classical transceivers. For example, measurements can be sent between first satellite **401** and third satellite **403** using classical transceiver **415** in first satellite **401** and classical transceiver **436** in third satellite **403**. Further, measurements can be sent between second satellite **402** and third satellite **403** using classical transceiver **425** in second satellite **402** and classical transceiver **436** in third satellite **403.**

These measurements can be used to determine whether eavesdropping has occurred with respect to the transmission of photon B from first satellite **401** and photon C from second satellite **402** to third satellite **403**. For example, a tomographic analysis of four-fold coincident data from measuring the state of photon B and photon C can be used to reconstruct the state of photons A and D to verify against the target entangled state. In this example, the test entangled state is the state of the entangled photon pair AD in which photon A is measured by polarization analyzer **413** and photon D is measured by polarization analyzer **423,** when heralded by detection of photons B and C in the Bell measurement system **434.** The target entangled state for photons A and D in the entangled photon pair AD is determined by the results of the Bell measurement system **434.**

In this example, the analysis is performed to identify and analyze four-fold coincident events. The events are for example, two entangled photon pairs are successfully produced, where the first entangled photon pair is produced on first satellite **401** in SPDC crystal system **411** and the second entangled photon pair is produced on second satellite **402** in the SPDC crystal system **421**. The analysis then determines whether all four photons are successfully detected. Then four-fold photon detection events are identified and a determination is made of the entanglement between photon A and photon D.

If eavesdropping is not present, then photon A and photon D are used in performing secure communications. A number of different types of communications can be performed using these photons. For example, these photons can be used to generate and distribute quantum keys.

Thus, entanglement between photons such as photon A and photon D forming entangled photon pair AD on remote satellites can occur through entanglement swapping even though a line of sight is not present between the satellites. In this example, the swapping occurs through interfering photon B and photon C using beam splitter **433** at third satellite **403**. The swapping occurs even though interaction between photon A and photon D has not occurred.

The illustration of quantum entanglement system **400** is presented as one illustrative example and not meant to limit the manner in which other quantum entanglement swapping systems can be implemented.

For example, a single classical transceiver can be used in third satellite **403** in place of the two classical transceivers depicted for this example. In the illustrative example, second satellite **402** can use classical transceiver **425** to exchange information with classical transceiver **415** in first satellite **401**. Example, first satellite **401** and second satellite **402** can each also include a translation system in addition to or in place of the thermal management systems depicted in the satellites.

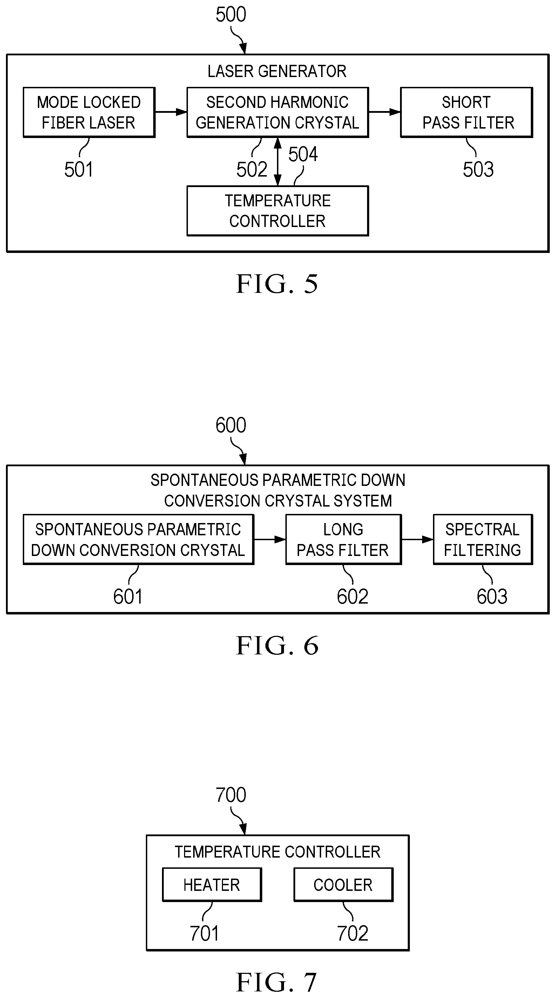

With reference to **Figure 5,** an illustration of a block diagram of a laser generator and a laser system is depicted in accordance with an illustrative embodiment. Laser generator **500** is an example of an implementation for a laser generator in the number of laser generators **227** in **Figure 2, first** laser generator **300** and second laser generator **301** in **Figure 3,** and laser generator **410** in **Figure 4.** As depicted, laser generator **500** comprises mode locked fiber laser **501,** second harmonic generation (SHG) crystal **502,** short pass filter **503,** and temperature controller **504.**

In this illustrative example, mode locked fiber laser **501** is a type of laser generator that generates ultrashort pulses of light by mode-locking within an optical fiber using the properties of the optical fiber to create and maintain the short pulse duration. For example, a femtosecond fiber laser can be used. In this illustrative example, the laser generates laser beam pulses having a wavelength of 1560 nm, which are frequency doubled to 780 nm in a nonlinear crystal.

In this example, second harmonic generation crystal **502** is a bismuth triborate (BiBO) crystal and received the laser beam generated by mode locked fiber laser **501**. Second harmonic generation crystal **502** doubles the frequency of laser beam received from mode locked fiber laser **501**. This doubling of the frequency results in laser beam pulses having a wavelength of 390 nm. The 390 nm laser beam pulses are used as the pump to create entangled photon pairs.

Laser beam output from second harmonic generation crystal **502** is sent through short pass filter **503** to be output as the laser beam used as the pump light for use in the spontaneous parametric down conversion (SPDC) process. Short pass filter **503** allows wavelengths shorter than a selected cutoff such as 390 nm to be output from laser generator **500.**

In this illustrative example, temperature controller **504** controls the temperature of second harmonic generation crystal **502** to maintain the second harmonic generation crystal at the optimal phase matching temperature to maximize the amount of 390 nm light generated.

In other examples, entangled photon wavelengths from 400 nm to 1000 nm, which corresponds to pump photon wavelengths from laser generator being from 200 nm to 500 nm. In some examples, entangled photon wavelengths of 525 nm to 850 nm can be used, corresponding to pump photon wavelengths of 212 nm to 425 nm.

With reference now to **Figure 6,** an illustration of a block diagram of a spontaneous parametric down conversion crystal system is depicted in accordance with an illustrative embodiment. In this illustrative example, spontaneous parametric down conversion crystal system **600** is an example of an implementation for spontaneous parametric down conversion crystal system **221** in **Figure 2.** This system is also an example of an implementation of SPDC crystal system **411** and SPDC crystal system **421** in **Figure 4.** As depicted, spontaneous parametric down conversion crystal system **600** comprises spontaneous parametric down conversion crystal **601,** long pass filter **602,** and spectral filtering **603.**

In this example, spontaneous parametric down conversion crystal 601 can be comprised of a number of materials selected from at least one of periodically poled potassium titanyl phosphate (ppKTP), potassium titanyl phosphate (KTP), potassium titanyl arsenate (KTA), rubidium titanyl phosphate (RTP), rubidium doped potassium titanyl phosphate (RB:KTP), potassium dihydrogen phosphate (KDP), bismuth triborate (BiBO), beta barium borate (BBO), periodically poled lithium niobate (PPLN), and other suitable materials.

The selection of the material for spontaneous parametric down conversion crystal system **600** can depend on a number of factors such as characteristics of the pump pulse, optimizing the rate of entangled photon pair production, optimizing the degree of entanglement of entangled photon pair, and the indistinguishability or swapability of entangled photon pairs. In this example ppKTP can be used with laser generator **500** in **Figure 5** that generates a laser beam pulse of 390 nm.

In this illustrative example, long pass filter **602** can be used to remove the residual 390 nm pump light output from spontaneous parametric down conversion crystal **601.** This filtering is performed to ensure only the entangled photons at the desired wavelengths such as 780 nm are present. Other wavelengths can result in incorrect measurements by the detectors and the polarization analyzers.

In this depicted example, spectral filtering **603** is performed to prepare the entangled photon pairs AB and CD. This filtering removes photon pairs that are created by the spontaneous parametric down conversion crystal **601** that are not sufficiently indistinguishable to be able to undergo the entanglement swapping operation. Spectral filtering can be accomplished for example using an interference filter, a distributed Bragg reflector, or other suitable optical element.

Turning now to **Figure 7,** an illustration of a block diagram of a temperature controller is depicted in accordance with an illustrative embodiment. In this illustrative example, temperature controller **700** is an example of the component that can be used in thermal management system **240** in **Figure 2.** Temperature controller **700** is an example of first temperature controller **306** and second temperature controller **307** in **Figure 3.**

In this example, temperature controller **700** operates to maintain a spontaneous parametric down conversion crystal at an annealing temperature. Maintaining the annealing temperature can involve at least one of heating or cooling the crystal depending on the environment.

In this example, temperature controller **700** comprises at least one of heater **701** or cooler **702.** In this illustrative example, heater **701** can be, for example, an induction heater, an infrared heater, a resistive heater, a Peltier heater, or some other suitable type of heater. Cooler **702** can be selected from at least one of a cryogenic cooler, a Peltier cooler, or some other suitable type of cooler.

In this example, the spontaneous parametric down conversion crystal is a poled potassium titanyl phosphate (ppKTP), and the laser generator generates a laser beam pulse having a wavelength of 390 nm. With this example, temperature controller **700** can maintain an annealing temperature that is about 120 degrees C.

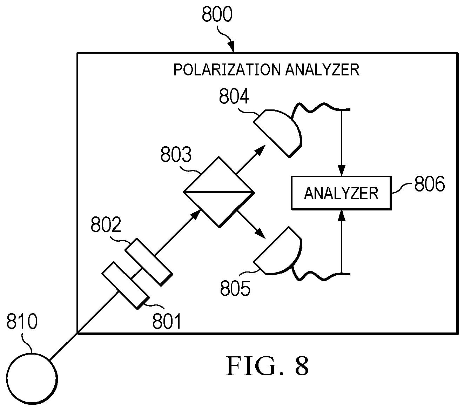

Turning now to **Figure 8,** a schematic illustration of a polarization analyzer is depicted in accordance with an illustrative embodiment. In this illustrative example, polarization analyzer **800** is an example of an implementation of polarization analyzer **413** and polarization analyzer **423** in **Figure 4.** As depicted, polarization analyzer **800** comprises liquid crystal variable retarder (LCVR) **801,** liquid crystal variable retarder (LCVR) **802,** polarizing beam splitter (PBS) **803,** avalanche photodiode detector (APD) **804,** avalanche photodiode detector (APD) **805,** and analyzer **806.**

In this example, photon **810** is sent though liquid crystal variable retarder (LCVR) **801** and liquid crystal variable retarder (LCVR) **802** in polarization analyzer **800.** These liquid crystal variable retarders can be operated to control the polarization state of light in an electrically tunable manner. The retardance difference (phase delay) between the orthogonal polarization components is controlled by the voltage applied to the liquid crystal variable retarder.

Another parameter that can be set of the liquid crystal variable retarder is the optical axis (slow axis), which controls how the liquid crystal variable retarder interacts with light. In this example, liquid crystal variable retarder is fixed at 22.5 degrees or 45 degrees depending on the liquid crystal variable retarder. In this example, the angle is referenced from the vertical axis or axis in and out of the plane of the optics.

In this example, liquid crystal variable retarder **801** is fixed at an axis angle of 22.5 degrees and a retardance of 0.5 waves for an antidiagonal-diagonal (AD) polarization basis and liquid crystal variable retarder **802** is sent to an angle of 45 degrees and a retardance of 0.25 waves for a right-left (RL) polarization basis. Photon **810** output from the liquid crystal variable retarders is sent to polarizing beam splitter **803**. This use of the liquid crystal variable retarders in conjunction with polarizing beam splitter **803** causes the entangled photons to be projected into different polarization bases for read out by detectors such as avalanche photodiode detector (APD) **804** and avalanche photodiode detector (APD) **805.**

In this example, the entangled photon pairs are created in the HV (horizontal-vertical) polarization basis. If entangled photon pairs are truly entangled, the entangled photon pairs will be correlated in the other canonical polarization basis as well such as RL (right-left) and AD (antidiagonal-diagonal).

Applying the correct retardance to the right liquid crystal variable retarder such as liquid crystal variable retarder **801** or liquid crystal variable retarder **802** transforms the HV photons into these other polarization basis for measurement.

In this illustrative example, analyzer **806** operates to analyze detections of photons by avalanche photodiode detector **804** and avalanche photodiode detector **805**. In this illustrative example, analyzer **806** can be implemented using various types of devices and processors. For example, analyzer **806** can be comprised of a time to digital converter (TDC) and a field programmable gate array (FPGA). The time to digital converter can measure the time between detections of photons by the avalanche photodiode detectors. The field programmable gate array can be configured to analyze those measurements.

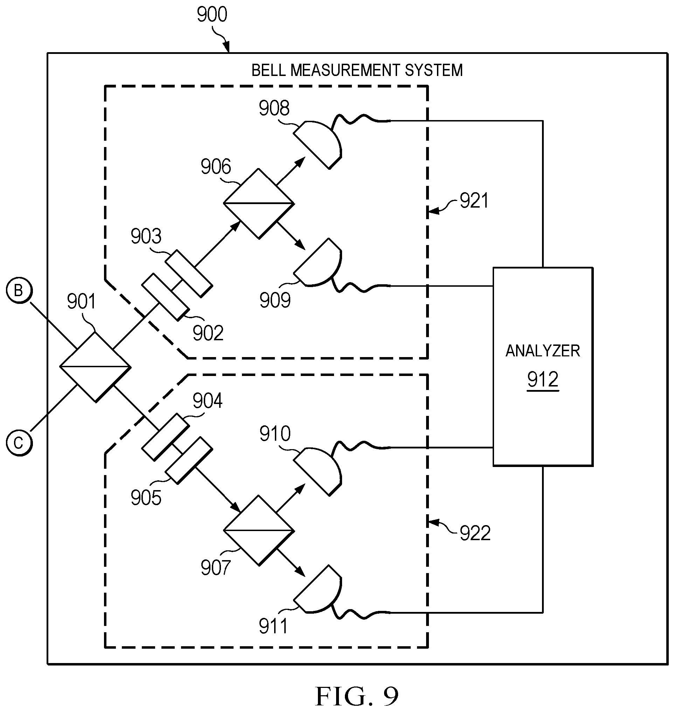

Next in **Figure 9,** an illustration of a block diagram of a Bell measurement system is depicted in accordance with an illustrative embodiment. In this illustrative example, the Bell measurement system **900** is an example of one implementation for Bell measurement system **434** in **Figure 4.** As depicted, Bell measurement system **900** comprises beam splitter **901,** liquid crystal variable retarder **902,** liquid crystal variable retarder **903,** liquid crystal variable retarder **904,** liquid crystal variable retarder **905,** polarizing beam splitter (PBS) **906,** polarizing beam splitter (PBS) **907,** avalanche photodiode detector (APD) **908,** avalanche photodiode detector (APD) **909,** avalanche photodiode detector (APD) **910,** avalanche photodiode detector (APD) **911,** and analyzer **912.**

In this example, first polarization analyzer **921** is formed by liquid crystal variable retarder **902,** liquid crystal variable retarder **903,** polarizing beam splitter (PBS) **906,** avalanche photodiode detector (APD) **908,** and avalanche photodiode detector (APD) **909.** Second polarization analyzer **922** is formed from liquid crystal variable retarder **904,** liquid crystal variable retarder **905,** polarizing beam splitter (PBS) **907,** avalanche photodiode detector (APD) **910,** avalanche photodiode detector (APD) **911,** and analyzer **912.**

As depicted, photon B and photon C are combined by beam splitter **901.** In this example, beam splitter **901** is a non-polarizing beam splitter with two input ports and two output ports.

In order to combine photons B and C, photon B is directed towards one input port of beam splitter **901** and photon C is directed towards second input port of beam splitter **901.** Upon interfering at beam splitter **901,** photon B and photon C are placed into an entangled state in the form of combined photon pair BC in a Bell state.

These two photons leave beam splitter **901** through either of the two available output ports. It is equally likely for both photon B and photon C to leave through the same output port or one photon to leave through each output port.

Photons leaving through the first output port are directed towards first polarization analyzer **921,** avalanche photodiode detector **908,** and avalanche photodiode detector **909.** Photons leaving through the second output port are directed towards second polarization analyzer **922** to avalanche photodiode detector **910** and avalanche photodiode detector **911.**

In this example the liquid crystal variable retarders and polarizing beam splitters operate to project photons C and D into a different polarization basis for detection. The liquid crystal variable retarders are not needed for entanglement swapping and are typically left at 0-wave retardance such that the photons are detected in the horizontal-vertical polarization basis. The liquid crystal variable retarders are used in this example to enable calibration and system health monitoring measurements.

In this example, entangled photon pairs are entangled photon pair AB and entangled photon pair CD (for example, as shown in first entangled photon pair **230** and second entangled photon pair **233** in **Figure 2**). These entangled photon pairs are generated in the state described as follows:

$$|\psi> = \tfrac{1}{\sqrt{2}}\big(|HV> + e^{i\phi}|VH>\big)$$

where $\phi$ is a phase factor that is dependent on the specific optics in the beam path and may be somewhat different between entangled photon pairs AB and CD. $H$ is the horizontal polarization and $V$ is the vertical polarization.

The first symbol within the ket denotes the polarization of the first photon and the second symbol within the ket denotes the polarization of the second photon within an entangled photon pair.

For the entangled photon pair BC, after combination at beam splitter **901,** photon B and photon C in this entangled photon pair is the combined entangled state of one of the four Bell states. Any of the four Bell states are generated with equal probability any time B and C are combined on the beam splitter.

The illustrative example is sensitive to two of those Bell states: $|\Psi^+> = \frac{1}{\sqrt{2}}(|HV> + |VH>)$ or $|\Psi^-> = \frac{1}{\sqrt{2}}(|HV> - |VH>)$. Which of these two Bell states is formed is determined by which detectors in the Bell state measurement system register a photon.

Whenever the other two Bell states are generated, these states are not detected or registered as an entanglement swapping event. The illustrative example is not sensitive to the other two Bell states. These Bell states are $|\Phi^+> = \frac{1}{\sqrt{2}}(|HH> + |VV>)$ and $|\Phi^-> = \frac{1}{\sqrt{2}}(|HH> - |VV>)$.

In this illustrative example, analyzer **912** receives detections from the four avalanche photodiode detectors. These detections can be used by analyzer **912** to correlate single photon detection events to identify coincident detections. This correlation involves analyzing the timing of photon arrivals at different avalanche photodiode detectors to determine if arrival times at detectors occur simultaneously or within a selected time window. When two or more detectors register a photon within this window, the detections are considered coincident. This coincidence indicates that the photons may be entangled. In one illustrative example, analyzer **912** can be implemented using a time to digital converter (TDC) and a field programmable gate array (FPGA). Measurements from detecting swapped entangled pairs AD and BC from the different polarization analyzers and the Bell state measurement system can be used in a tomography analysis. Tomographic analysis of photons with different polarizations is a technique used to reconstruct the quantum state of a system by measuring photons in various polarization bases. Photons can be polarized in different directions that are referred to as polarization states. Tomographic analysis involves collecting data from multiple polarization measurements and then using mathematical algorithms to reconstruct the full polarization state of the entangled photon pairs. In this example, this analysis can be performed using a controller such as controller **416,** controller **438,** and controller **426** in **Figure 4.** In other illustrative examples, this analysis can also be performed by analyzer **806** in **Figure 8** or analyzer **912** in **Figure 9.**

In this illustrative example, the examples of the polarization analyzer **800** in **Figure 8** and Bell measurement system **900** in **Figure 9** are used to implement polarization analyzer **413,** polarization analyzer **423,** and two polarization analyzers in Bell measurement system **434** in **Figure 4.**

With this example, each polarization analyzer comprises two liquid crystal variable retarders (LCVR), one polarizing beam splitter (PBS), and two avalanche photodiode detectors (APDs). This combination of the eight liquid crystal variable retarders and eight avalanche photodiode detectors can increase the fraction of swapping events that can be detected. As a result, the overall entanglement swapping rate can be increased. Additionally, these components provide redundancy and robustness to failures of a subset of the avalanche photodiode detectors or liquid crystal variable retarders. For example, one of the avalanche photodiode detectors on each of the polarization analyzers can fail and the system can continue to execute entanglement swapping.

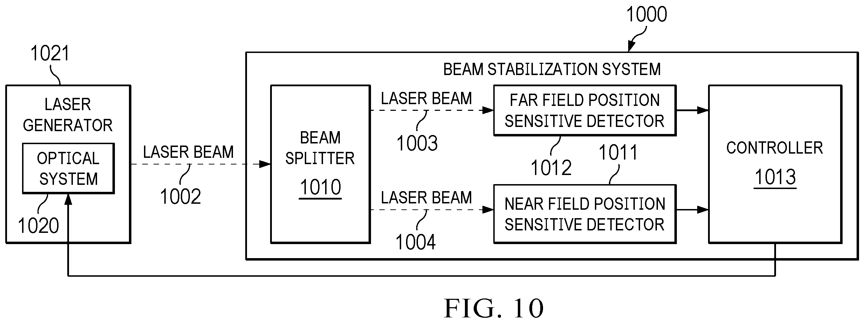

With reference now to **Figure 10,** an illustration of a block diagram of a beam stabilization system is depicted in accordance with an illustrative embodiment. In this illustrative example, beam stabilization system **1000** operates to control the pointing of laser beam **1002** emitted by laser generator **1021.** In this example, a spontaneous parametric down conversion crystal (not shown) can be located in the path of laser beam **1002** between laser generator **1021** and beam splitter **1010.**

In this illustrative example, beam stabilization system **1000** comprises beam splitter **1010,** near field position sensitive detector **1011,** far field position sensitive detector **1012,** and controller **1013.**

In this illustrative example, beam splitter **1010** splits laser beam **1002** into laser beam **1003** and laser beam **1004.** As depicted, laser beam **1003** is directed to far field position sensitive detector **1012,** and laser beam **1002** is directed towards near field position sensitive detector **1011.**

In this example, near field position sensitive detector **1011** and far field position sensitive detector **1012** are located roughly equidistant from beam splitter **1010.** In this example, a lens (not shown) is located in laser beam **1003** with far field position sensitive detector **1012** located at the focus of the lens. These detectors generate information about the position of the respective laser beams. For example, these detectors can generate x and y coordinates of the laser beams on the surface of the detector. This can be used by controller **1013** to control the pointing of laser beam **1002.** This control can be performed by sending control signals to optical system **1020** in laser generator **1021.** This optical system can include mirrors, lenses, and controllers. In this manner, controller **1013** can make adjustments in the pointing laser beam **1002** to hit the desired locations in a spontaneous parametric down conversion crystal and also the desired locations to combine photons B and C at the combining beam splitter.

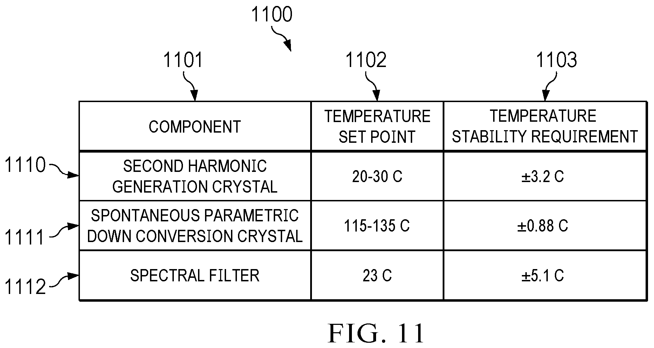

With reference next to **Figure 11**, an illustration of a block diagram of temperature control loops is depicted in accordance with an illustrative embodiment. In this illustrative example, table **1100** identifies parameters for temperature control loops used to control the temperature of components in quantum entanglement systems. The control loops can be proportional integral derivative (PID) loops that can maintain a desired output by adjusting process control inputs based on an accumulation of past errors and the prediction of future errors.

In this illustrative example, the columns in table **1100** comprise the following columns: component **1101**, temperature set point **1102**, and temperature stability requirement **1103**. Component **1101** identifies the optical components for which temperature is controlled. Temperature set point **1102** identifies temperatures that may be used to select a temperature to maintain for the optical components. Temperature stability requirement **1103** identifies a range from which the selected temperature can vary on a plus or minus basis.

In this example, three entries are present. Entry **1110** is for a second harmonic generation crystal in which the temperature maintained for this crystal can be a temperature selected from a range of 20 degrees C to 30 degrees C plus or minus 3.2 degrees C. Entry **1111** is for a spontaneous parametric down conversion crystal in which the temperature maintained for this crystal can be selected from a range of 115 degrees C to 135 degrees C plus or minus 0.88 degrees C, and entry **1112** is for a spectral filter in which the temperature range maintained for this filter can be a temperature selected such as 23 degrees C plus or minus 5.1 degrees C.

The examples of different components and systems in **Figures 5-11** are provided as an example of one implementation and not intended to limit the manner in which the systems can be implemented in other examples. For example, spontaneous parametric down conversion crystal system **600** is shown as having a single spontaneous parametric down conversion crystal. In other illustrative examples, one or more spontaneous parametric down conversion crystals can be present in addition to this crystal. Further, when more than one spontaneous parametric down conversion crystal is present, different types of crystals can be used.

In yet another illustrative example, some of these components can be optional. For example, beam stabilization system **1000** may be omitted in some illustrative examples. In yet another illustrative example, two liquid crystal variable retarders can be used in a polarization analyzer instead of four liquid crystal variable retarders in Bell measurement system **900** in **Figure 9.**

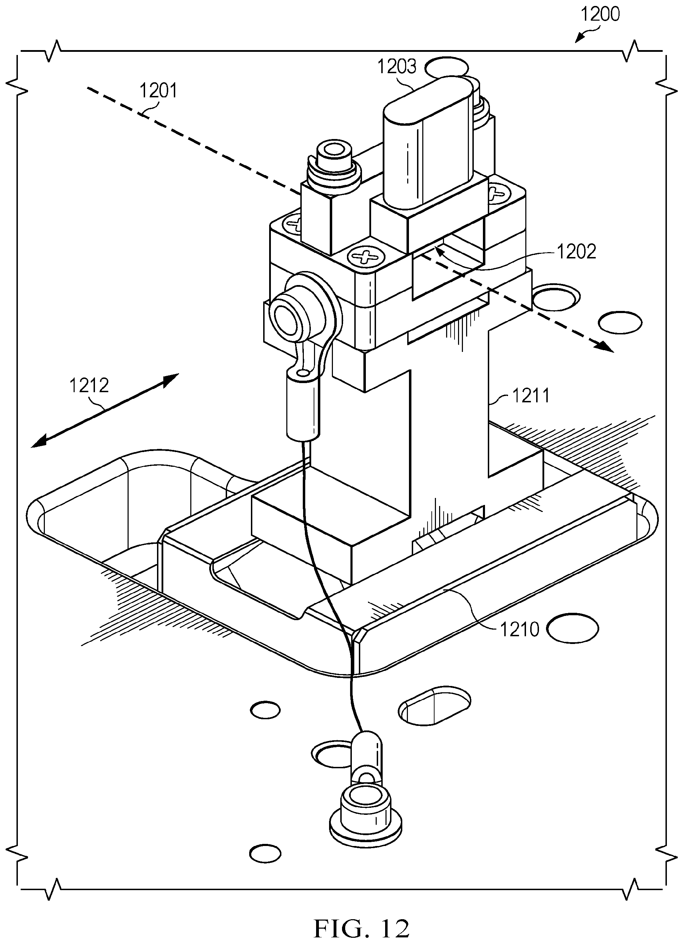

With reference to **Figure 12,** a pictorial illustration of a crystal management system for a spontaneous parametric down conversion crystal is depicted in accordance with an illustrative embodiment. In this illustrative example, crystal management system **1200** is an example of an implementation for crystal management system **220** in **Figure 2.**

As depicted, laser beam path **1201** is a path for laser beam pulses that extends through spontaneous parametric down conversion crystal **1202**. In this illustrative example, resistive heater **1203** is an example of heater **701** in temperature controller **700** in **Figure 7.** This heater heats spontaneous parametric down conversion crystal **1202** to an elevated temperature that is an annealing temperature for this crystal. The heating is performed continuously during the generation of entangled photon pairs.

Additionally, crystal management system **1200** also includes translation stage **1210.** This translation stage is an example of an implementation for translation system **241** in **Figure 2.** In this example, translation stage **1210** moves crystal holder **1211** along axis **1212** such that the laser beam pulses transmitted along laser beam path **1201** hit spontaneous parametric down conversion crystal **1202** at different locations during the generation of entangled photon pairs. In other words, the position of spontaneous parametric down conversion crystal **1202** is moved along axis **1212** such that the laser beam pulses hit spontaneous parametric down conversion crystal **1202** at different locations based on the position of spontaneous parametric down conversion crystal **1202** moving along axis **1212**. Thus, translation stage **1210** can move spontaneous parametric down conversion crystal **1202** during the generation of entangled photon pairs can reduce degradation of spontaneous parametric down conversion crystal **1202.**

In this example, the use of a thermal management system such as resistive heater **1203** and a translation system such as translation stage **1210** in crystal management system **1200** can increase the lifespan of spontaneous parametric down conversion crystal **1202**. This increase in lifespan can occur through maintaining spontaneous parametric down conversion crystal **1202** and annealing temperature during the generation of integral photon pairs such that the degradation to spontaneous parametric down conversion crystal **1202** can be reduced or reversed. Using translation stage **1210** to move the position of spontaneous parametric down conversion crystal **1202** during the generation of entangled photon pairs also reduces the degradation occurring at any particular location on spontaneous parametric down conversion crystal **1202** because of the continuous movement in the position of spontaneous parametric down conversion crystal **1202**.

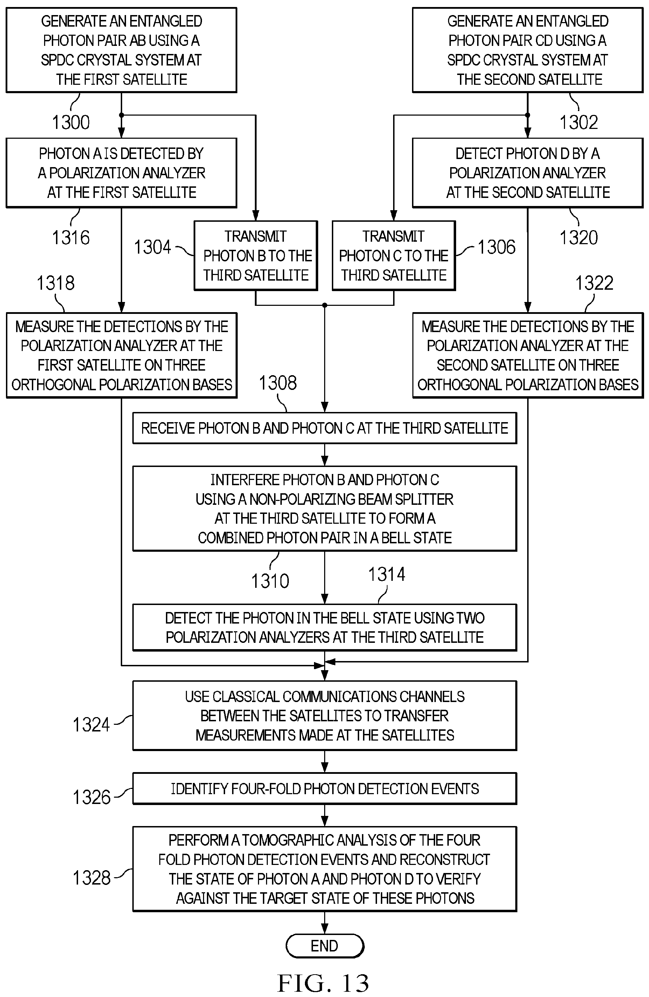

Turning next to **Figure 13,** an illustration of a flowchart of a process for performing entanglement swapping is depicted in accordance with an illustrative embodiment. The process in **Figure 13** can be implemented in hardware, software, or both. When implemented in software, the process can take the form of program instructions that are run by one of more processor units located in one or more hardware devices in one or more computer systems. For example, the process can be implemented in components quantum entitlement system such as quantum entanglement system **400** in **Figure 4.**

The process generates an entangled photon pair AB using a SPDC crystal system at the first satellite (operation **1300**). The process also generates an entangled photon pair CD using a SPDC crystal system at the second satellite (operation **1302**). The process transmits photon B to third satellite (operation **1304**) and transmits photon C to third satellite (operation **1306**). The process receives photon B and photon C at the third satellite (operation **1308**). The process interferes photon B and photon C using a non-polarizing beam splitter at the third satellite to form a combined photon pair in a Bell state (operation **1310**).

The process detects the photon in the Bell state using two polarization analyzers at the third satellite (operation **1314**).

While the combination of detections occur at the third satellite, parallel processes can occur at the first satellite and the second satellite. As depicted, photon A is detected by a polarization analyzer at satellite 1 (operation **1316**). These detections are measured by the polarization analyzer at the first satellite on three orthogonal polarization bases (operation **1318**). Further, photon D is detected by a polarization analyzer at the second satellite (operation **1320**). These detections are measured by the polarization analyzer at the second satellite on three orthogonal polarization bases (operation **1322**).

Once the measurements are made at all three satellites, then these measurements can be used to determine whether swapping has occurred and whether eavesdropping has occurred. The process uses classical communications channels between the satellites to transfer measurements made at the satellites (step **1324**). These measurements provide information about photo detection times, polarization bases for the detected photons, and other information.

The process identifies four-fold photon detection events (step **1326**). In operation **1326**, four-fold photon detection events are events for the simultaneous detection of four photons, such as A, B, C, and D across multiple detectors within a specific time window. The detection of these four photons enables confirming the entanglement and other quantum correlations between the photons.

The process then performs a tomographic analysis of the four fold photon detection events and reconstructs the state of photon A and photon D to verify against the target state of these photons (operation **1328**). The process terminates thereafter.

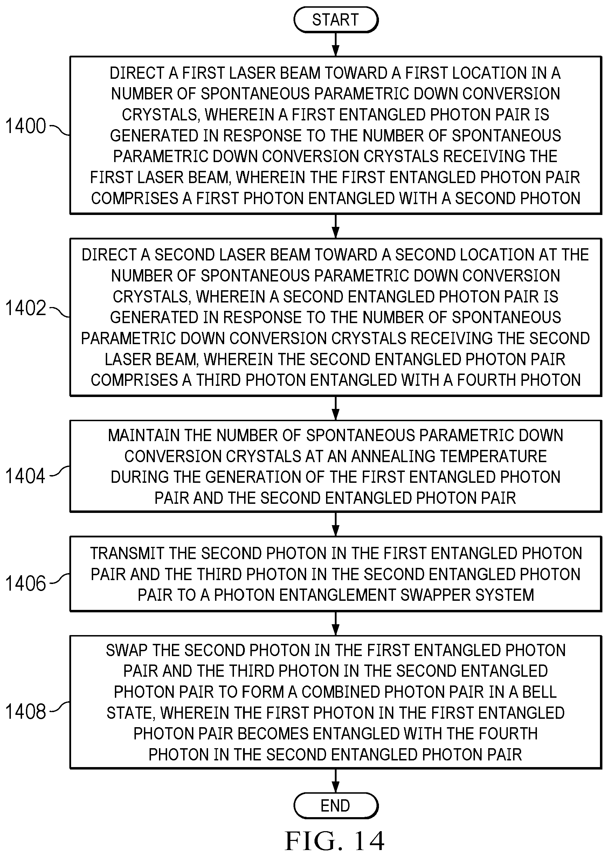

Turning now to **Figure 14,** an illustration of a flowchart of a process for generating entangled photon pairs is depicted in accordance with an illustrative embodiment. The process in this flowchart can be implemented in a quantum entanglement system such as quantum entanglement system **202** in **Figure 2** and quantum entanglement system **400** in **Figure 4.** Further, these processes can be performed using one or more components in these entanglement systems.

The process directs a first laser beam toward a first location in a number of spontaneous parametric down conversion crystals, wherein a first entangled photon pair is generated in response to the number of spontaneous parametric down conversion crystals receiving the first laser beam, wherein the first entangled photon pair comprises a first photon entangled with a second photon (operation **1400**). The process directs a second laser beam toward a second location at the number of spontaneous parametric down conversion crystals, wherein a second entangled photon pair is generated in response to the number of spontaneous parametric down conversion crystals receiving the second laser beam, wherein the second entangled photon pair comprises a third photon entangled with a fourth photon (operation **1402**). In this example, the first location and the second location can be in same crystal or different crystal when the number of spontaneous parametric down conversion crystals are two or more crystals and not a single crystal.

The process maintains the number of spontaneous parametric down conversion crystals at an annealing temperature during the generation of the first entangled photon pair and the second entangled photon pair (operation **1404**). The process transmits the second photon in the first entangled photon pair and the third photon in the second entangled photon pair to a photon entanglement swapper system (operation **1406**). The process swaps the second photon in the first entangled photon pair and the third photon in the second entangled photon pair to form a combined photon pair in a Bell state, wherein the first photon in the first entangled photon pair becomes entangled with the fourth photon in the second entangled photon pair (operation **1408**). The process terminates thereafter. In this example, the swapping can occur by interfering the second photon and the third photon at a beam splitter.

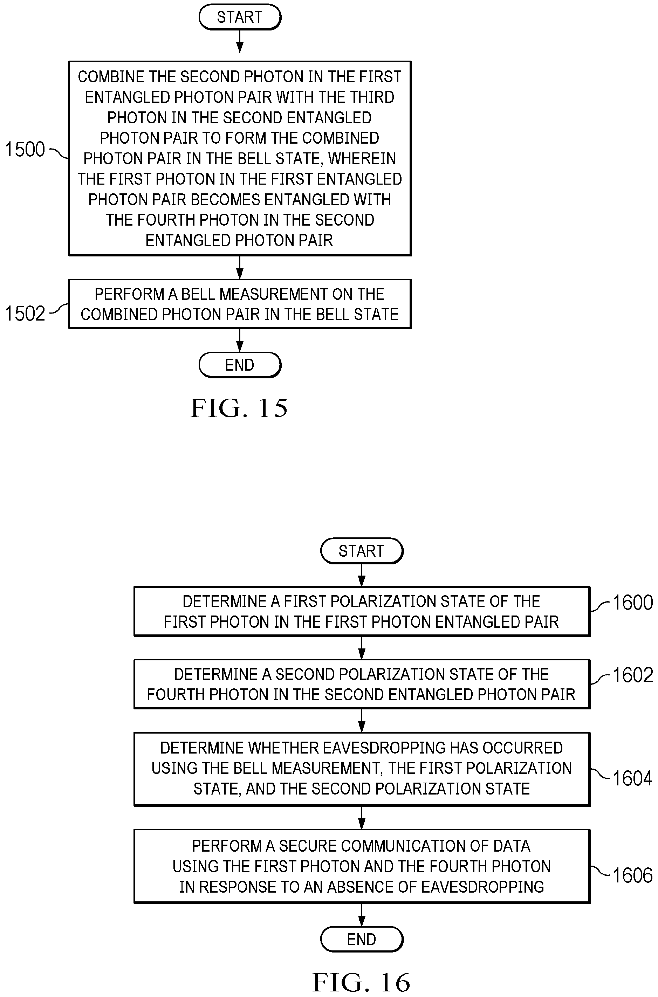

With reference next to **Figure 15,** an illustration of a flowchart for swapping photon entanglement is depicted in accordance with an illustrative embodiment. The process in this figure is an example of an implementation for operation **1408** in **Figure 14.**

The process begins by combining the second photon in the first entangled photon pair with the third photon in the second entangled photon pair to form the combined photon pair in the Bell state, wherein the first photon in the first entangled photon pair becomes entangled with the fourth photon in the second entangled photon pair (operation **1500**). The process performs a Bell measurement on the combined photon pair in the Bell state (operation **1502**). The process terminates thereafter. In this example, the Bell measurement can be performed to confirm that the swapping of entanglement between the first entangled photon pair and the second entangled photon pair has occurred such that the first photon in the first entangled photon pair becomes entangled with the fourth photon in the second entangled photon pair.

Turning to **Figure 16**, an illustration of a flowchart of a process for performing secure communications using the entangled photons is depicted in accordance with an illustrative embodiment. The process in this figure is an example of additional operations that can be performed with the operations in **Figure 14** and **Figure 15.**

The process begins by determining a first polarization state of the first photon in the first photon entangled pair (operation **1600**). The process determines a second polarization state of the fourth photon in the second entangled photon pair (operation **1602**).

The process determines whether eavesdropping has occurred using the Bell measurement, the first polarization state, and the second polarization state (operation **1604**). The process performs a secure communication of data using the first photon and the fourth photon in response to an absence of eavesdropping (operation **1606**). The process terminates thereafter. In operation **1606,** secure communication of data is selected from a group of techniques comprising quantum key distribution, quantum teleportation, quantum secret sharing, entanglement-based quantum authentication, and other suitable quantum communication techniques using entangled photons.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Thus, the illustrative examples provide a method, apparatus, and system quantum entanglement of photons.

In one illustrative example, a quantum entanglement system comprises a laser system, a spontaneous parametric down conversion crystal system, and a thermal management system. The laser system is configured to generate a laser beam. The spontaneous parametric down conversion crystal system comprises a spontaneous parametric down conversion crystal configured to receive the laser beam at a spontaneous parametric down conversion crystal and generates an entangled photon pair in response to the spontaneous parametric down conversion crystal receiving the laser beam. The thermal management system is configured to maintain the spontaneous parametric down conversion crystal at an annealing temperature during a generation of the entangled photon pair.

The thermal management system enables increasing the lifespan of crystals used to generate entangled photons. Further, this thermal management system also enables selecting laser generators having shorter wavelengths and higher peak powers. These types of lasers may increase degradation to a spontaneous parametric down conversion crystal as compared to larger lasers without the use of the thermal management system. Further, with the use of temperature control loops for other components such as a second harmonic generation crystal and a spectral filter, increased performance in generating entangled photon pairs can occur.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Further, the disclosure comprises configurations according to the following clauses.

Clause 1. A quantum entanglement system (202; 400) comprising:

a laser system (219) configured to generate a first laser beam (225) and a second laser beam (226);
a spontaneous parametric down conversion crystal system (221; 411, 421) comprising:

a number of spontaneous parametric down conversion crystals (228) configured to:

receive the first laser beam (225) at a first location (229) in the number of spontaneous parametric down conversion crystals (228) ;
generate a first entangled photon pair (230) in response to the number of spontaneous parametric down conversion crystals (228) receiving the first laser beam (225), wherein the first entangled photon pair (230) comprises a first photon (217) entangled with a second photon (231);
receive the second laser beam (226) at a second location (232) in the number of spontaneous parametric down conversion crystals (228); and
generate a second entangled photon pair (233) in response to the number of spontaneous parametric down conversion crystals (228) receiving the second laser beam (226), wherein the second entangled photon pair (233) comprises a third photon (234) entangled with a fourth photon (235);

a thermal management system (240; 412, 422) configured to:

maintain the number of spontaneous parametric down conversion crystals (228) at an annealing temperature (243) during a generation of the first entangled photon pair (230) and the second entangled photon pair (233); and

a translation system (241; 441, 442) configured to:
move a position of the number of spontaneous parametric down conversion crystals (228) relative to the first laser beam (225) and the second laser beam (226); and
a photon entanglement swapper system (224) configured to:
swap entanglement between the first entangled photon pair (230) and the second entangled photon pair (233), wherein the second photon (231) in the first entangled photon pair (230) is combined with the third photon (234) in the second entangled photon pair (233) to form a combined photon pair (237) in a Bell state (238) and wherein the first photon (217) in the first entangled photon pair (230) becomes entangled with the fourth photon (235) in the second entangled photon pair (233).

Clause 2. The quantum entanglement system (202; 400) of Clause 1, wherein the quantum entanglement system (202; 400) is connected to a satellite.
Clause 3. The quantum entanglement system (202; 400) of Clause 1 or 2, wherein:

the laser system (219) comprises a first laser generator (300) connected to a first platform (351) and configured to generate the first laser beam (225) and a second laser generator (301) connected to a second platform (352) and configured to generate the second laser beam (226);
the number of spontaneous parametric down conversion crystals (228) comprises a first spontaneous parametric down conversion crystal (302) connected to the first platform (351) and a second spontaneous parametric down conversion crystal (303) connected to the second platform (352);
the thermal management system (240) comprises a first temperature controller (306) connected to the first platform (351) and is configured to maintain the first spontaneous parametric down conversion crystal (302) at the annealing temperature (243) during the generation of the first entangled photon pair (230) and a second temperature controller (307) connected to the second platform (352) and is configured to maintain the second spontaneous parametric down conversion crystal (303) at the annealing temperature (243) during the generation of the second entangled photon pair (233);
the translation system (241) comprises a first translator (304) connected to the first platform (351) and is configured to move the first spontaneous parametric down conversion crystal (302) and a second translator (305) connected to the second platform (352) and is configured to move the second spontaneous parametric down conversion crystal (303); and
the photon entanglement swapper system (224) is connected to a platform selected from a group comprising the first platform (351), the second platform (352) and a third platform (353).

Clause 4. The quantum entanglement system (202; 400) of Clause 3, wherein the quantum entanglement system (202; 400) is deployable by being connectable to the first platform (351), the second platform (352), and the third platform (353), which are each selected from a group comprising a mobile platform, a stationary platform, a land-based structure, an aquatic-based structure, a space-based structure, a ground station, a satellite, a space station, a spacecraft, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a submarine, an automobile, a power plant, a bridge, a dam, a house, a manufacturing facility, and a building.

Clause 5. The quantum entanglement system (202; 400) of Clause 1, wherein:

the laser system (219) comprises a first laser generator (300) that is configured to generate the first laser beam (225) in a first satellite (401) and a second laser generator (301) that is configured to generate the second laser beam (226) in a second satellite (402);

the number of spontaneous parametric down conversion crystals (228) comprises a first spontaneous parametric down conversion crystal (302) connected to the first satellite (401) and a second spontaneous parametric down conversion crystal (303) connected to the second satellite (402);

the translation system (241) comprises a first translator (304) connected to the first satellite (401) and is configured to move the first spontaneous parametric down conversion crystal (302) and a second translator (305) connected to the second satellite (402) and is configured to move the second spontaneous parametric down conversion crystal (303);

the thermal management system (240) comprises a first temperature controller (306) connected to the first satellite (401) and is configured to maintain the first spontaneous parametric down conversion crystal (302) at the annealing temperature (243) during the generation of the first entangled photon pair (230) and a second temperature controller (307) connected to the second satellite (402) and is configured to maintain the second spontaneous parametric down conversion crystal (303) at the annealing temperature (243) during the generation of the second entangled photon pair (233); and

the photon entanglement swapper system (224) connected to a platform selected from a group comprising a third satellite (403) and a ground station.

Clause 6. The quantum entanglement system (202; 400) of Clause 1, wherein the translation system (241) is configured to move the position of the number of spontaneous parametric down conversion crystals (228) on a number of axes.

Clause 7. The quantum entanglement system (202; 400) of Clause 1, wherein the thermal management system (240; 412, 422) is configured to maintain the number of spontaneous parametric down conversion crystals (228) at the annealing temperature (243) that is selected to minimize degradation in the number of spontaneous parametric down conversion crystals (228) while maximizing photon pair generation by the number of spontaneous parametric down conversion crystals (228).

Clause 8. The quantum entanglement system (202; 400) of Clause 1, wherein the thermal management system (240; 412, 422) is configured to perform at least one of heating or cooling of the number of spontaneous parametric down conversion crystals (228) to maintain the number of spontaneous parametric down conversion crystals (228) at the annealing temperature (243) during the generation of the first entangled photon pair (230) and the second entangled photon pair (233).

Clause 9. The quantum entanglement system (202; 400) of Clause 1, wherein the thermal management system (240; 412, 422) is configured to maintain the number of spontaneous parametric down conversion crystals (228) at the annealing temperature (243) during the generation of the first entangled photon pair (230) and the second entangled photon pair (233) using a proportional-integral-derivative control loop.

Clause 10. The quantum entanglement system (202; 400) of Clause 1, wherein the thermal management system (240; 412, 422) is configured to maintain the number of spontaneous parametric down conversion crystals (228) at the annealing temperature (243) that is from about 50 degrees C to about 150 degrees C.

Clause 11. The quantum entanglement system (202; 400) of Clause 1, wherein the number of spontaneous parametric down conversion crystals (228) is comprised of a number of materials selected from at least one of periodically poled potassium titanyl phosphate (ppKTP), potassium titanyl phosphate (KTP), potassium titanyl arsenate (KTA), rubidium titanyl phosphate (RTP), rubidium doped potassium titanyl phosphate (RB:KTP), potassium dihydrogen phosphate (KDP), bismuth triborate (BiBO), beta barium borate (BBO), and periodically poled lithium niobate (PPLN).

Clause 12. The quantum entanglement system (202; 400) of Clause 1, wherein the photon entanglement swapper system (224) comprises:

a beam splitter (260) configured to:

receive the second photon (231) from the first entangled photon pair (230) and the third photon (234) from the second entangled photon pair (233);

output the second photon (231) and the third photon (234) as the combined photon pair (237) in the Bell state (238), wherein the first photon (217) in the first entangled photon pair (230) becomes entangled with the fourth photon (235) in the second entangled photon pair (233);

a first polarization analyzer (261) configured to:

receive the combined photon pair (237) in the Bell state (238) and generate a first measurement (239) of the combined photon pair (237) in the Bell state (238); and

a second polarization analyzer (262) configured to:

receive the combined photon pair (237) in the Bell state (238) and generate a second measurement (242) of the combined photon pair (237) in the Bell state (238).
Clause 13. The quantum entanglement system (202, 400) of Clause 12 further comprising:

a communications system (280) configured to:

determine whether eavesdropping has occurred using the first measurement (239) and the second measurement (242); and

perform a secure communication of data using the first photon (217) and the fourth photon (235) in response to an absence of eavesdropping.

Clause 14. The quantum entanglement system (202, 400) of Clause 13, wherein the secure communication of data is selected from a group of techniques comprising quantum key distribution, quantum teleportation, quantum secret sharing, and entanglement-based quantum authentication. Clause 15. A quantum entanglement system (202, 400) comprising:

a laser system (219) configured to generate a laser beam;

a spontaneous parametric down conversion crystal system (221, 441, 422) comprising:

a spontaneous parametric down conversion crystal configured to:

receive the laser beam at the spontaneous parametric down conversion crystal configured to:

generate an entangled photon pair in response to the spontaneous parametric down conversion crystal receiving the laser beam; and

a thermal management system (240, 412, 422) configured to:

maintain the spontaneous parametric down conversion crystal at an annealing temperature (243) during a generation of the entangled photon pair.

Clause 16. The quantum entanglement system (202, 400) of Clause 15, wherein the entangled photon pair is a first photon (217) entangled with a second photon (231) and further comprising:

a photon entanglement swapper system (224) configured to:

swap entanglement between the first entangled photon pair (230) and a second entangled photon pair (233) with a third photon (234) entangled with a fourth (235) photon, wherein the second photon (231) in the first entangled photon pair (230) is combined with the third photon (234) in the second entangled photon pair (233) to form a combined photon pair (237) in a Bell state (238) and wherein the first photon (217) in the first entangled photon pair (230) becomes entangled with the fourth photon (235) in the second entangled photon pair (233).

Clause 17. The quantum entanglement system (202, 400) of Clause 16, wherein the photon entanglement swapper system (224) comprises:

a beam splitter (260) configured to:

receive the second photon (231) and the third photon (234);

output the second photon (231) and the third photon (234) as the combined photon pair (237) in the Bell state (238), wherein the first photon (217) in the first entangled photon pair (230) becomes entangled with the fourth photon (235) in the second entangled photon pair (233);

a first polarization analyzer (261) having an input configured to:

receive the combined photon pair (237) in the Bell state (238) and generate a first measurement (239) of the combined photon pair (237) in the Bell state (238); and

a second polarization analyzer (262) configured to: receive the combined photon pair (237) in the Bell state (238) and generate a second measurement (242) of the combined photon pair (237) in the Bell state (238).

Clause 18. The quantum entanglement system (202, 400) of Clause 15 further comprising:

a translation system (241) configured to:

move a position of the spontaneous parametric down conversion crystal relative to the laser beam.

Clause 19. The quantum entanglement system (202, 400) of Clause 15 further comprising:

a translation system (241) configured to:

continuously move a position of the spontaneous parametric down conversion crystal relative to the laser beam.

Clause 20. The quantum entanglement system (202, 400) of Clause 19, wherein the translation system (241) moves the position of the spontaneous parametric down conversion crystal on a number of axes.

Clause 21. The quantum entanglement system (202, 400) of Clause 15, wherein the thermal management system (240, 412, 422) maintains the spontaneous parametric down conversion crystal at the annealing temperature (243) that is selected to minimize degradation in spontaneous parametric down conversion crystal while maximizing photon pair generation by the spontaneous parametric down conversion crystal.

Clause 22. The quantum entanglement system (202, 400) of Clause 15, wherein the thermal management system (240, 412, 422) performs at least one of heating or cooling of the spontaneous parametric down conversion crystal to maintain the spontaneous parametric down conversion crystal at the annealing temperature (243) during the generation of the entangled photon pair.

Clause 23. The quantum entanglement system (202, 400) of Clause 15, wherein the thermal management system (240, 412, 422) maintains the spontaneous parametric down conversion crystal at the annealing temperature (243) during the generation of the entangled photon pair using a proportional-integral-derivative control loop.

Clause 24. The quantum entanglement system (202, 400) of Clause 15, wherein the thermal management system (240, 412, 422) maintains the spontaneous parametric down conversion crystal at the annealing temperature (243) that is from about 115 degrees C to about 135 degrees C.

Clause 25. The quantum entanglement system (202, 400) of Clause 15, wherein the spontaneous parametric down conversion crystal is comprised of a material selected from a group comprising periodically poled potassium titanyl phosphate (ppKTP), potassium titanyl phosphate (KTP), potassium titanyl arsenate (KTA), rubidium titanyl phosphate (RTP), rubidium doped potassium titanyl phosphate (RB:KTP), potassium dihydrogen phosphate (KDP), bismuth triborate (BiBO), beta barium borate (BBO), and periodically poled lithium niobate (PPLN).

Clause 26. The quantum entanglement system (202, 400) of Clause 15 further comprising:

a platform, wherein the laser system (219), the spontaneous parametric down conversion crystal system (221, 441, 422), and the thermal management system (240, 412, 422) are connected to the platform.

Clause 27. The quantum entanglement system (202, 400) of Clause 26, wherein the platform is selected from a group comprising a mobile platform, a stationary platform, a land-based structure, an aquatic-based structure, a space-based structure, a ground station, a satellite, a space station, a spacecraft, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a submarine, an automobile, a power plant, a bridge, a dam, a house, a manufacturing facility, and a building.

Clause 28. A method for generating entangled photon pairs, the method comprising:

directing (1400) a first laser beam (225) toward a first location (229) in a number of spontaneous parametric down conversion crystals (228), wherein a first entangled photon pair (230) is generated in response to the number of spontaneous parametric down conversion crystals (228) receiving the first laser beam (225), wherein the first entangled photon pair (230) comprises a first photon (217) entangled with a second photon (231);
directing (1402) a second laser beam (226) toward a second location (232) in the number of spontaneous parametric down conversion crystals (228), wherein a second entangled photon pair (233) is generated in response to the number of spontaneous parametric down conversion crystals (228) receiving the second laser beam (226), wherein the second entangled photon pair (233) comprises a third photon (234) entangled with a fourth photon (235);
maintaining (1404) the number of spontaneous parametric down conversion crystals (228) at an annealing temperature (243) during the generation of the first entangled photon pair (230) and the second entangled photon pair (233);
transmitting (1406) the second photon (231) in the first entangled photon pair (230) and the third photon (234) in the second entangled photon pair (233) to a photon entanglement swapper system (224); and
swapping (1408) the second photon (231) in the first entangled photon pair (230) and the third photon (234) in the second entangled photon pair (233) to form a combined photon pair (237) in a Bell state (238), wherein the first photon (217) in the first entangled photon pair (230) becomes entangled with the fourth photon (235) in the second entangled photon pair (233).

Clause 29. The method of Clause 28, wherein the step of swapping (1408) comprises:

combining (1500) the second photon (231) in the first entangled photon pair (230) with the third photon (234) in the second entangled photon pair (233) to form the combined photon pair (237) in the Bell state (238), wherein the first photon (217) in the first entangled photon pair (230) becomes entangled with the fourth photon (235) in the second entangled photon pair (233); and
performing (1502) a Bell measurement on the combined photon pair (237) in the Bell state (238).

Clause 30. The method of Clause 29 further comprising:

determining (1600) a first polarization state of the first photon (217) in the first photon (217) entangled pair;
determining (1602) a second polarization state of the fourth photon (235) in the second entangled photon pair (233);
determining (1604) whether eavesdropping has occurred using the Bell measurement, the first polarization state, and the second polarization state; and
performing (1608) a secure communication of data using the first photon (217) and the fourth photon (235) in response to an absence of eavesdropping.

Clause 31. The method of Clause 30, wherein the secure communication of data is selected from a group of techniques comprising quantum key distribution, quantum teleportation, quantum secret sharing, and entanglement-based quantum authentication.

## Claims

1. A quantum entanglement system (202; 400) comprising:

   a laser system (219) configured to generate a first laser beam (225) and a second laser beam (226);
   a spontaneous parametric down conversion crystal system (221; 411, 421) comprising:

   a number of spontaneous parametric down conversion crystals (228) configured to:

   receive the first laser beam (225) at a first location (229) in the number of spontaneous parametric down conversion crystals (228) ;
   generate a first entangled photon pair (230) in response to the number of spontaneous parametric down conversion crystals (228) receiving the first laser beam (225), wherein the first entangled photon pair (230) comprises a first photon (217) entangled with a second photon (231);
   receive the second laser beam (226) at a second location (232) in the number of spontaneous parametric down version crystals (228); and
   generate a second entangled photon pair (233) in response to the number of spontaneous parametric down conversion crystals (228) receiving the second laser beam (226), wherein the second entangled photon pair (233) comprises a third photon (234) entangled with a fourth photon (235);

   a thermal management system (240; 412, 422) configured to:
   maintain the number of spontaneous parametric down conversion crystals (228) at an annealing temperature (243) during a generation of the first entangled photon pair (230) and the second entangled photon pair (233); and
   a translation system (241; 441, 442) configured to:
   move a position of the number of spontaneous parametric down conversion crystals (228) relative to the first laser beam (225) and the second laser beam (226); and
   a photon entanglement swapper system (224) configured to:
   swap entanglement between the first entangled photon pair (230) and the second entangled photon pair (233), wherein the second photon (231) in the first entangled photon pair (230) is combined with the third photon (234) in the second entangled photon pair (233) to form a combined photon pair (237) in a Bell state (238) and wherein the first photon (217) in the first entangled photon pair (230) becomes entangled with the fourth photon (235) in the second entangled photon pair (233).

2. The quantum entanglement system (202; 400) of claim 1, wherein the quantum entanglement system (202; 400) is connectable to a satellite.

3. The quantum entanglement system (202; 400) of claim 1 or 2, wherein:

   the laser system (219) comprises a first laser generator (300) connected to a first platform (351) and configured to generate the first laser beam (225) and a second laser generator (301) connected to a second platform (352) and configured to generate the second laser beam (226);
   the number of spontaneous parametric down conversion crystals (228) comprises a first spontaneous parametric down conversion crystal (302) connected to the first platform (351) and a second spontaneous parametric down version crystal (303) connected to the second platform (352);
   the thermal management system (240) comprises a first temperature controller (306) connected to the first platform (351), said thermal management system (240) being configured to maintain the first spontaneous parametric down conversion crystal (302) at the annealing temperature (243) during the generation of the first entangled photon pair (230), said thermal management system (240) comprising a second temperature controller (307) connected to the second platform (352) and being configured to maintain the second spontaneous parametric down conversion crystal (303) at the annealing temperature (243) during the generation of the second entangled photon pair (233);
   the translation system (241) comprises a first translator (304) connected to the first platform (351), said translation system (241) being configured to move the first spontaneous parametric down conversion crystal (302), said translation system (241) comprising a second translator (305) connected to the second platform (352) and being configured to move the second spontaneous parametric down conversion crystal (303); and
   the photon entanglement swapper system (224) is connected to a platform selected from a group comprising the first platform (351), the second platform (352) and a third platform (353).

4. The quantum entanglement system (202; 400) of claim 1 or 2, wherein:

the laser system (219) comprises a first laser generator (300) that is configured to generate the first laser beam (225) in a first satellite (401) and a second laser generator (301) that is configured to generate the second laser beam (226) in a second satellite (402);

the number of spontaneous parametric down conversion crystals (228) comprises a first spontaneous parametric down conversion crystal (302) connectable to the first satellite (401) and a second spontaneous parametric down conversion crystal (303) connectable to the second satellite (402);

the translation system (241) comprises a first translator (304) connectable to the first satellite (401) and is configured to move the first spontaneous parametric down conversion crystal (302) and a second translator (305) connectable to the second satellite (402) and is configured to move the second spontaneous parametric down conversion crystal (303);

the thermal management system (240) comprises a first temperature controller (306) connectable to the first satellite (401) and is configured to maintain the first spontaneous parametric down conversion crystal (302) at the annealing temperature (243) during the generation of the first entangled photon pair (230) and a second temperature controller (307) connectable to the second satellite (402) and is configured to maintain the second spontaneous parametric down conversion crystal (303) at the annealing temperature (243) during the generation of the second entangled photon pair (233); and

the photon entanglement swapper system (224) connectable to a platform selected from a group comprising a third satellite (403) and a ground station.

5. The quantum entanglement system (202; 400) of any one of the preceding claims, wherein the translation system (241) is configured to move a position of the number of spontaneous parametric down conversion crystals (228) on a number of axes.

6. The quantum entanglement system (202; 400) of any one of the preceding claims, wherein the thermal management system (240; 412, 422) is configured to maintain the number of spontaneous parametric down conversion crystals (228) at the annealing temperature (243) that is selected to minimize degradation in the number of spontaneous parametric down conversion crystals (228) while maximizing photon pair generation by the number of spontaneous parametric down conversion crystals (228).

7. The quantum entanglement system (202; 400) of any one of the preceding claims, wherein the thermal management system (240; 412, 422) is configured to perform at least one of heating or cooling of the number of spontaneous parametric down conversion crystals (228) to maintain the number of spontaneous parametric down conversion crystals (228) at the annealing temperature (243) during the generation of the first entangled photon pair (230) and the second entangled photon pair (233).

8. The quantum entanglement system (202; 400) of any one of the preceding claims, wherein the thermal management system (240; 412, 422) is configured to maintain the number of spontaneous parametric down conversion crystals (228) at the annealing temperature (243) during the generation of the first entangled photon pair (230) and the second entangled photon pair (233) using a proportional-integral-derivative control loop.

9. The quantum entanglement system (202; 400) of any one of the preceding claims, wherein the thermal management system (240; 412, 422) is configured to maintain the number of spontaneous parametric down conversion crystals (228) at the annealing temperature (243) that is from about 50 degrees C to about 150 degrees C.

10. The quantum entanglement system (202; 400) of any one of the preceding claims, wherein the photon entanglement swapper system (224) comprises:
a beam splitter (260) configured to:

receive the second photon (231) from the first entangled photon pair (230) and the third photon (234) from the second entangled photon pair (233);

output the second photon (231) and the third photon (234) as the combined photon pair (237) in the Bell state (238), wherein the first photon (217) in the first entangled photon pair (230) becomes entangled with the fourth photon (235) in the second entangled photon pair (233);
a first polarization analyzer (261) configured to:

receive the combined photon pair (237) in the Bell state (238) and generate a first measurement (239) of the combined photon pair (237) in the Bell state (238); and
a second polarization analyzer (262) configured to:
receive the combined photon pair (237) in the Bell state (238) and generate a second measurement (242) of the combined photon pair (237) in the Bell state (238).

11. The quantum entanglement system (202; 400) of claim 10, further comprising:
a communications system (280) configured to:

determine whether eavesdropping has occurred using the first measurement (239) and the second measurement (242); and
perform a secure communication of data using the first photon (217) and the fourth photon (235) in response to an absence of eavesdropping.

12. The quantum entanglement system (202; 400) of claim 11, wherein the secure communication of data is selected from a group of techniques comprising quantum key distribution, quantum teleportation, quantum secret sharing, and entanglement-based quantum authentication.

13. A method for generating entangled photon pairs, the method comprising:

directing (1400) a first laser beam (225) toward a first location (229) in a number of spontaneous parametric down conversion crystals (228), wherein a first entangled photon pair (230) is generated in response to the number of spontaneous parametric down conversion crystals (228) receiving the first laser beam (225), wherein the first entangled photon pair (230) comprises a first photon (217) entangled with a second photon (231);
directing (1402) a second laser beam (226) toward a second location (232) in the number of spontaneous parametric down conversion crystals (228), wherein a second entangled photon pair (233) is generated in response to the number of spontaneous parametric down conversion crystals (228) receiving the second laser beam (226), wherein the second entangled photon pair (233) comprises a third photon (234) entangled with a fourth photon (235);
maintaining (1404) the number of spontaneous parametric down conversion crystals (228) at an annealing temperature (243) during the generation of the first entangled photon pair (230) and the second entangled photon pair (233);
transmitting (1406) the second photon (231) in the first entangled photon pair (230) and the third photon (234) in the second entangled photon pair (233) to a photon entanglement swapper system (224); and
swapping (1408) the second photon (231) in the first entangled photon pair (230) and the third photon (234) in the second entangled photon pair (233) to form a combined photon pair (237) in a Bell state (238), wherein the first photon (217) in the first entangled photon pair (230) becomes entangled with the fourth photon (235) in the second entangled photon pair (233).

14. The method of claim 13, wherein the step of swapping (1408) comprises:

combining (1500) the second photon (231) in the first entangled photon pair (230) with the third photon (234) in the second entangled photon pair (233) to form the combined photon pair (237) in the Bell state (238), wherein the first photon (217) in the first entangled photon pair (230) becomes entangled with the fourth photon (235) in the second entangled photon pair (233); and
performing (1502) a Bell measurement on the combined photon pair (237) in the Bell state (238).

15. The method of claim 13 or 14, further comprising:

determining (1600) a first polarization state of the first photon (217) in the first photon (217) entangled pair;
determining (1602) a second polarization state of the fourth photon (235) in the second entangled photon pair (233);
determining (1604) whether eavesdropping has occurred using the Bell measurement, the first polarization state, and the second polarization state; and
performing (1608) a secure communication of data using the first photon (217) and the fourth photon (235) in response to an absence of eavesdropping.

FIG. 1

FIG. 2

QUANTUM COMMUNICATIONS ENVIRONMENT 200

QUANTUM ENTANGLEMENT SYSTEM 202

CRYSTAL MANAGEMENT SYSTEM 220
- THERMAL MANAGEMENT SYSTEM 240
- TRANSLATION SYSTEM 241

LASER SYSTEM 219
- LASER GENERATORS 227

FIRST LASER BEAM 225 221
SECOND LASER BEAM 226

SPONTANEOUS PARAMETRIC DOWN CONVERSION CRYSTAL SYSTEM 228
- SPONTANEOUS PARAMETRIC DOWN CONVERSION CRYSTALS
  - FIRST LOCATION 229
  - SECOND LOCATION 232
- ANNEALING TEMPERATURE 243

PLATFORMS 250

FIRST ENTANGLED PHOTON PAIR 230
- FIRST PHOTON 217
- SECOND PHOTON 231

233

SECOND ENTANGLED PHOTON PAIR
- THIRD PHOTON 234
- FOURTH PHOTON 235

QUANTUM NETWORK 203

BELL STATE 238 237

COMBINED PHOTON PAIR
- SECOND PHOTON 231
- THIRD PROTON 234

PHOTON ENTANGLEMENT SWAPPER SYSTEM 224
- BEAM SPLITTER 260
- FIRST POLARIZATION ANALYZER 261
- FIRST MEASUREMENT 239
- SECOND POLARIZATION ANALYZER 262
- SECOND MEASUREMENT 242

COMMUNICATIONS SYSTEM 280

EP 4 708 731 A1

FIG. 3

FIG. 4

500

LASER GENERATOR

| MODE LOCKED FIBER LASER | → | SECOND HARMONIC GENERATION CRYSTAL | → | SHORT PASS FILTER |

501

502 504

503

TEMPERATURE CONTROLLER

FIG. 5

600

SPONTANEOUS PARAMETRIC DOWN CONVERSION CRYSTAL SYSTEM

| SPONTANEOUS PARAMETRIC DOWN CONVERSION CRYSTAL | → | LONG PASS FILTER | → | SPECTRAL FILTERING |

601

602

603

FIG. 6

700

TEMPERATURE CONTROLLER

| HEATER | COOLER |

701

702

FIG. 7

800

POLARIZATION ANALYZER

804

803

802

810

801

805

ANALYZER ─806

FIG. 8

FIG. 9

FIG. 10

|  | 1100 |  |
| :---: | :---: | :---: |
| 1101 | 1102 | 1103 |

| COMPONENT | TEMPERATURE SET POINT | TEMPERATURE STABILITY REQUIREMENT |
| :---: | :---: | :---: |
| SECOND HARMONIC GENERATION CRYSTAL | 20-30 C | ±3.2 C |
| SPONTANEOUS PARAMETRIC DOWN CONVERSION CRYSTAL | 115-135 C | ±0.88 C |
| SPECTRAL FILTER | 23 C | ±5.1 C |

1110, 1111, 1112

## FIG. 11

FIG. 12

GENERATE AN ENTANGLED
PHOTON PAIR AB USING A
SPDC CRYSTAL SYSTEM AT
THE FIRST SATELLITE

1300

PHOTON A IS DETECTED BY
A POLARIZATION ANALYZER
AT THE FIRST SATELLITE

1316

1318

MEASURE THE DETECTIONS BY THE
POLARIZATION ANALYZER AT THE
FIRST SATELLITE ON THREE
ORTHOGONAL POLARIZATION BASES

GENERATE AN ENTANGLED
PHOTON PAIR CD USING A
SPDC CRYSTAL SYSTEM AT
THE SECOND SATELLITE

1302

DETECT PHOTON D BY A
POLARIZATION ANALYZER
AT THE SECOND SATELLITE

1320

1322

MEASURE THE DETECTIONS BY THE
POLARIZATION ANALYZER AT THE
SECOND SATELLITE ON THREE
ORTHOGONAL POLARIZATION BASES

1304 — TRANSMIT
PHOTON B TO THE
THIRD SATELLITE

TRANSMIT
PHOTON C TO THE
THIRD SATELLITE — 1306

1308

RECEIVE PHOTON B AND PHOTON C AT THE THIRD SATELLITE

INTERFERE PHOTON B AND PHOTON C
USING A NON-POLARIZING BEAM SPLITTER
AT THE THIRD SATELLITE TO FORM A
COMBINED PHOTON PAIR IN A BELL STATE

1310          1314

DETECT THE PHOTON IN THE BELL STATE USING TWO
POLARIZATION ANALYZERS AT THE THIRD SATELLITE

1324 — USE CLASSICAL COMMUNICATIONS CHANNELS
BETWEEN THE SATELLITES TO TRANSFER
MEASUREMENTS MADE AT THE SATELLITES

1326 — IDENTIFY FOUR-FOLD PHOTON DETECTION EVENTS

1328 — PERFORM A TOMOGRAPHIC ANALYSIS OF THE FOUR
FOLD PHOTON DETECTION EVENTS AND RECONSTRUCT
THE STATE OF PHOTON A AND PHOTON D TO VERIFY
AGAINST THE TARGET STATE OF THESE PHOTONS

END

FIG. 13

START

1400 — DIRECT A FIRST LASER BEAM TOWARD A FIRST LOCATION IN A NUMBER OF SPONTANEOUS PARAMETRIC DOWN CONVERSION CRYSTALS, WHEREIN A FIRST ENTANGLED PHOTON PAIR IS GENERATED IN RESPONSE TO THE NUMBER OF SPONTANEOUS PARAMETRIC DOWN CONVERSION CRYSTALS RECEIVING THE FIRST LASER BEAM, WHEREIN THE FIRST ENTANGLED PHOTON PAIR COMPRISES A FIRST PHOTON ENTANGLED WITH A SECOND PHOTON

1402 — DIRECT A SECOND LASER BEAM TOWARD A SECOND LOCATION AT THE NUMBER OF SPONTANEOUS PARAMETRIC DOWN CONVERSION CRYSTALS, WHEREIN A SECOND ENTANGLED PHOTON PAIR IS GENERATED IN RESPONSE TO THE NUMBER OF SPONTANEOUS PARAMETRIC DOWN CONVERSION CRYSTALS RECEIVING THE SECOND LASER BEAM, WHEREIN THE SECOND ENTANGLED PHOTON PAIR COMPRISES A THIRD PHOTON ENTANGLED WITH A FOURTH PHOTON

1404 — MAINTAIN THE NUMBER OF SPONTANEOUS PARAMETRIC DOWN CONVERSION CRYSTALS AT AN ANNEALING TEMPERATURE DURING THE GENERATION OF THE FIRST ENTANGLED PHOTON PAIR AND THE SECOND ENTANGLED PHOTON PAIR

1406 — TRANSMIT THE SECOND PHOTON IN THE FIRST ENTANGLED PHOTON PAIR AND THE THIRD PHOTON IN THE SECOND ENTANGLED PHOTON PAIR TO A PHOTON ENTANGLEMENT SWAPPER SYSTEM

1408 — SWAP THE SECOND PHOTON IN THE FIRST ENTANGLED PHOTON PAIR AND THE THIRD PHOTON IN THE SECOND ENTANGLED PHOTON PAIR TO FORM A COMBINED PHOTON PAIR IN A BELL STATE, WHEREIN THE FIRST PHOTON IN THE FIRST ENTANGLED PHOTON PAIR BECOMES ENTANGLED WITH THE FOURTH PHOTON IN THE SECOND ENTANGLED PHOTON PAIR

END

FIG. 14

START

COMBINE THE SECOND PHOTON IN THE FIRST ENTANGLED PHOTON PAIR WITH THE THIRD PHOTON IN THE SECOND ENTANGLED PHOTON PAIR TO FORM THE COMBINED PHOTON PAIR IN THE BELL STATE, WHEREIN THE FIRST PHOTON IN THE FIRST ENTANGLED PHOTON PAIR BECOMES ENTANGLED WITH THE FOURTH PHOTON IN THE SECOND ENTANGLED PHOTON PAIR

1500

PERFORM A BELL MEASUREMENT ON THE COMBINED PHOTON PAIR IN THE BELL STATE

1502

END

FIG. 15

START

DETERMINE A FIRST POLARIZATION STATE OF THE FIRST PHOTON IN THE FIRST PHOTON ENTANGLED PAIR

1600

DETERMINE A SECOND POLARIZATION STATE OF THE FOURTH PHOTON IN THE SECOND ENTANGLED PHOTON PAIR

1602

DETERMINE WHETHER EAVESDROPPING HAS OCCURRED USING THE BELL MEASUREMENT, THE FIRST POLARIZATION STATE, AND THE SECOND POLARIZATION STATE

1604

PERFORM A SECURE COMMUNICATION OF DATA USING THE FIRST PHOTON AND THE FOURTH PHOTON IN RESPONSE TO AN ABSENCE OF EAVESDROPPING

1606

END

FIG. 16

Europäisches
Patentamt

European
Patent Office

Office européen
des brevets

# EUROPEAN SEARCH REPORT

**Application Number**

EP 25 19 7449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/163860 A1 (VAN DEN BOSSCHE MATHIAS [FR]) 25 May 2023 (2023-05-25)<br>* paragraphs [0005] - [0007] *<br>* paragraphs [0050] - [0060] *<br>* figures 2, 3 * | 1-15 | INV.<br>H04B10/70 |
| A | US 11 387 913 B2 (AT & T IP I LP [US]) 12 July 2022 (2022-07-12)<br>* column 11, line 51 - column 15, line 59 *<br>* figures 2C-2H * | 1-15 | |
| A | YAN-CHAO LOU ET AL: "Three-Photon Polarization Entanglement of Green Light", ARXIV.ORG, CORNELL UNIVERSITY LIBRARY, 201 OLIN LIBRARY CORNELL UNIVERSITY ITHACA, NY 14853,<br>24 July 2024 (2024-07-24), XP091831566,<br>DOI: 10.1103/PHYSREVAPPLIED.22.014052<br>* Sections I. and II. *<br>* figure 2 * | 1-15 | |
| A | JP 2008 216369 A (JAPAN SCIENCE & TECH AGENCY) 18 September 2008 (2008-09-18)<br>* paragraphs [0006], [0007] *<br>* paragraphs [0037] - [0040] * | 1-15 | **TECHNICAL FIELDS SEARCHED (IPC)**<br><br>H04B |
| A | CN 118 264 333 A (UNIV SOUTH CHINA NORMAL) 28 June 2024 (2024-06-28)<br>* paragraphs [0014] - [0027] * | 1-15 | |
| A | EP 4 160 976 A1 (FRAUNHOFER GES FORSCHUNG [DE]) 5 April 2023 (2023-04-05)<br>* paragraph [0022] *<br>* paragraphs [0027] - [0029] *<br>* paragraphs [0046] - [0055] *<br>* figure 1 * | 1-15 | |

The present search report has been drawn up for all claims

| Place of search | Date of completion of the search | Examiner |
|---|---|---|
| Munich | 15 January 2026 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 19 7449

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| US 2023163860 | A1 | 25-05-2023 | EP 4184810 A1 | | 24-05-2023 |
| | | | FR 3129550 A1 | | 26-05-2023 |
| | | | US 2023163860 A1 | | 25-05-2023 |
| US 11387913 | B2 | 12-07-2022 | US 2020382219 A1 | | 03-12-2020 |
| | | | US 2022303023 A1 | | 22-09-2022 |
| JP 2008216369 | A | 18-09-2008 | NONE | | |
| CN 118264333 | A | 28-06-2024 | NONE | | |
| EP 4160976 | A1 | 05-04-2023 | EP 4160976 A1 | | 05-04-2023 |
| | | | ES 3028614 T3 | | 19-06-2025 |

EPO FORM P0459

For more details about this annex : see Official Journal of the European Patent Office, No. 12/82